# EUROPEAN PATENT APPLICATION

(11) **EP 4 730 835 A1**
(43) Date of publication of application: **22.04.2026**
(21) Application number: 24830573.2
(22) Date of filing: 18.06.2024
(51) Int. Cl.: H04Q 11/00

(54) **DOWNLINK SERVICE TRANSMITTING METHOD AND DEVICE, DOWNLINK SERVICE RECEIVING METHOD AND DEVICE, STORAGE MEDIUM, AND ELECTRONIC DEVICE**

(30) Priority: 27.06.2023 CN 202310771257
(71) Applicant: ZTE CORPORATION, Shenzhen, Guangdong 518057 (CN)
(72) Inventor: ZHANG, Weiliang, Shenzhen, Guangdong 518057 (CN); HUANG, Xingang, Shenzhen, Guangdong 518057 (CN)
(74) Representative: Brunazzi, Stefano
(86) International application number: PCT/CN2024/099935
(87) International publication number: WO 2025/001927

(57) **Abstract**

Provided are a method and apparatus for sending a downlink service, a method and apparatus for receiving a downlink service, a storage medium, and an electronic apparatus. The method for sending a downlink service includes: OLT shares a downlink time-division scheduling result of the downlink service with an ONU according to a first specified mode, wherein the downlink time-division scheduling result at least includes sending moments of one or more downlink services; and the OLT sends the downlink service according to the downlink time-division scheduling result.

## Description

The present invention claims the priority to Chinese Patent Application No. 202310771257.6, filed with the Chinese Patent Office on June 27, 2023 and entitled "Downlink Service Transmitting Method and Device, Downlink Service Receiving Method and Device, Storage Medium, and Electronic Device", which is incorporated in its entirety herein by reference.

### Technical Field

Examples of the present invention relate to the field of communication, and particularly relate to a method and apparatus for sending a downlink service, a method and apparatus for receiving a downlink service, a storage medium, and an electronic apparatus.

### Background

A passive optical network (PON) is a point-to-multi-point network topology. An optical line terminal (OLT) is connected to a plurality of optical network units (ONUs) through an optical distribution network (ODN).

A time division multiple access (TDMA) mechanism is used in an uplink direction. The OLT allocates an uplink bandwidth to the ONU through a dynamic bandwidth allocation (DBA) mechanism. The ONU sends an uplink service in the uplink bandwidth allocated by the OLT.

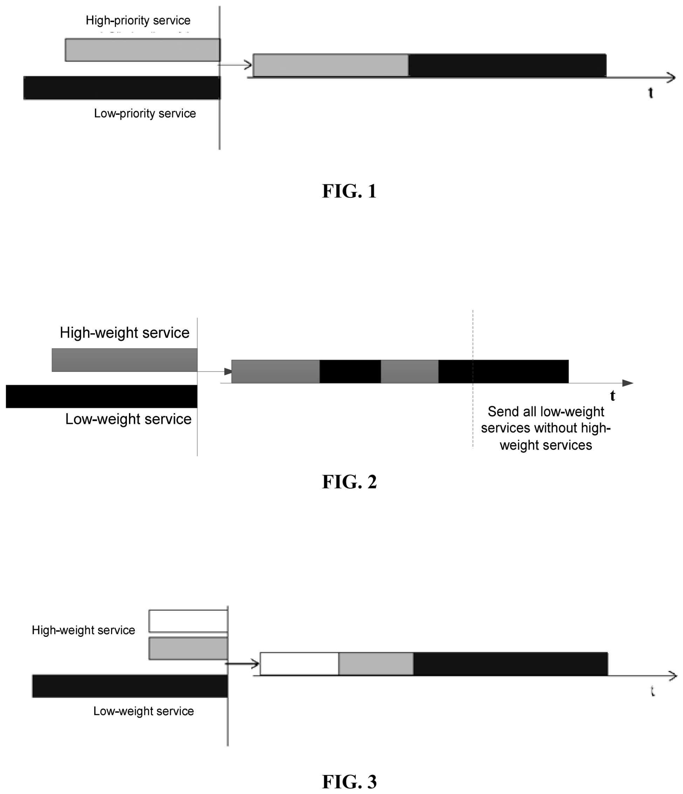

A time-division multiplexing (TDM) mechanism is used in a downlink direction. At present, the TDM mechanism in the downlink direction is generally completed through priority and weight based scheduling. For instance, as shown in Fig. 1, in the priority-based scheduling, a high-priority service is sent first, and a low-priority service is sent later. Further, for instance, as shown in Fig. 2, in the weight-based scheduling, services having greater weights are sent more, services having smaller weights are sent less, and services having a same weight are sent as much. Clearly, as shown in Fig. 3, priority and weight based hybrid scheduling can be implemented. The scheduling based on priorities and weights is generally to send services during scheduling, and results of positions and duration of scheduled services are generally unpredictable. Thus, it is impossible to give scheduling results in advance and give receiving suggestions to receivers.

With popularization of passive optical network applications, a line rate is improving, and different generations are constantly updating. In this process, new service requirements are constantly emerging. For instance, as the rate is continuously improved, a receiving capability of the ONU needs to be improved. However, what the ONU really needs to receive are a fraction of services. The standard organization has proposed that the ONU only receives its own part to achieve ONU energy-saving. For instance, because line loss of a branch optical fiber where each ONU is located is different, different forward error correction (FEC) codes or different modulation modes can be used to achieve a compact power budget and fully improve an overall bandwidth. For instance, in current standardization of the passive optical network, generally, different generations of passive optical networks (PONs) use different uplink and downlink wavelengths, and different generations use a wavelength division multiplexing coexistence mode. However, with increasing shortage of wavelength resources, different generations of PONs may use the same uplink and downlink wavelengths. Thus, it is necessary to achieve time division duplex coexistence between different generations of PONs, and downlink services at different rates are sent in a TDM mode. Finally, a passive optical network system has greater requirements of carrying low-latency services, leading to new requirements for sending of uplink and downlink services. All the requirements bring new challenges to implementation of a downlink TDM mechanism.

For the problem that an optical network unit cannot efficiently receive a downlink service sent by an optical line terminal in the related art, no effective solution has been proposed at present.

### Summary

Examples of the present invention provide a method and apparatus for sending a downlink service, a method and apparatus for receiving a downlink service, a storage medium, and an electronic apparatus, so as to at least solve the problem that an optical network unit cannot efficiently receive a downlink service sent by an optical line terminal in the related art.

An example of the present invention provides a method for sending a downlink service. The method includes: sharing, by an optical line terminal (OLT), a downlink time-division scheduling result of the downlink service with an optical network unit (ONU) according to a first specified mode, where the downlink time-division scheduling result at least includes sending moments of one or more downlink services; and sending, by the OLT, the downlink service according to the downlink time-division scheduling result.

Another example of the present invention further provides a method for sending a downlink service. The method includes: determining a to-be-sent downlink service, and performing downlink time-division scheduling on the downlink service based on at least one of the following: service traffic, service characteristics, and external input; and sharing, before sending the downlink service based on a downlink time-division scheduling result of the downlink service, the downlink time-division scheduling result of the downlink service with an ONU according to a first specified mode. The downlink time-division scheduling result at least includes sending moments of one or more downlink services.

Yet another example of the present invention further provides a method for receiving a downlink service. The method includes: obtaining, by an ONU, a downlink time-division scheduling result of the downlink service according to a second specified mode, where the downlink time-division scheduling result at least includes sending moments of one or more downlink services; and receiving, by the ONU, a target downlink service according to the downlink time-division scheduling result. The target downlink service is a service related to the ONU in the one or more downlink services.

Yet another example of the present invention further provides an apparatus for sending a downlink service. The apparatus includes: a first sharing module configured to share a downlink time-division scheduling result of the downlink service with an optical network unit (ONU) according to a first specified mode, where the downlink time-division scheduling result at least includes sending moments of one or more downlink services; and a sending module configured to send the downlink service according to the downlink time-division scheduling result.

Yet another example of the present invention further provides an apparatus for sending a downlink service. The apparatus includes: a scheduling module configured to determine a to-be-sent downlink service, and perform downlink time-division scheduling on the downlink service based on at least one of the following: service traffic, service characteristics, and external input; and a second sharing module configured to share, before sending the downlink service based on a downlink time-division scheduling result of the downlink service, the downlink time-division scheduling result of the downlink service with an ONU according to a first specified mode. The downlink time-division scheduling result at least includes sending moments of one or more downlink services.

Yet another example of the present invention further provides an apparatus for receiving a downlink service. The apparatus includes: an obtaining module configured to obtain a downlink time-division scheduling result of the downlink service according to a second specified mode, where the downlink time-division scheduling result at least includes sending moments of one or more downlink services; and a receiving module configured to receive a target downlink service according to the downlink time-division scheduling result. The target downlink service is a service related to a target ONU in the one or more downlink services.

Yet another example of the present invention further provides a computer-readable storage medium. The computer-readable storage medium stores a computer program. The computer program is configured to execute steps of any one of the above method examples at runtime.

Yet another example of the present invention further provides an electronic apparatus. The electronic apparatus includes a memory and a processor. The memory stores a computer program. The processor is configured to run the computer program to execute steps of any one of the above method examples.

Still another example of the present invention further provides a computer program product. The computer program product includes a non-volatile computer-readable storage medium. The non-volatile computer-readable storage medium stores a computer program. The computer program is configured to execute steps of any one of the above method examples at runtime.

### Brief Description of the Drawings

Fig. 1 is a schematic diagram of existing priority-based scheduling;
Fig. 2 is a schematic diagram of existing weight-based scheduling;
Fig. 3 is a schematic diagram of existing priority and weight based hybrid scheduling;
Fig. 4 is a block diagram of a hardware structure of a mobile terminal of a method for sending a downlink service and a method for receiving a downlink service according to an example of the present invention;
Fig. 5 is a flowchart of a method for sending a downlink service according to an example of the present invention;
Fig. 6 is a flowchart of another method for sending a downlink service according to an example of the present invention;
Fig. 7 is a flowchart of a method for receiving a downlink service according to an example of the present invention;
Fig. 8 is a flowchart of fully downlink time-division scheduling according to an example of the present invention;
Fig. 9 is a schematic diagram of scheduling in a downlink time-division scheduling slot in another scheduling mode according to an example of the present invention;
Fig. 10 is a schematic diagram of scheduling outside a downlink time-division scheduling slot in another scheduling mode according to an example of the present invention;
Fig. 11 is a schematic structural diagram of an existing frame start (FS) frame;
Fig. 12 is a schematic structural diagram of an improved FS frame according to an example of the present invention;
Fig. 13 is a schematic structural diagram of an FS frame payload according to an example of the present invention;
Fig. 14 is a schematic diagram of formation of an FS frame into a physical layer (PHY) frame according to an example of the present invention;
Fig. 15 is a schematic diagram of indication of each optical network unit (ONU) slot by a downlink time-division scheduling result according to an example of the present invention;
Fig. 16 is a schematic diagram of global downlink time-division scheduling according to an example of the present invention;
Fig. 17 is a schematic diagram of local downlink time-division scheduling according to an example of the present invention;
Fig. 18 is a schematic diagram of default downlink time-division scheduling according to an example of the present invention;
Fig. 19 is a block diagram of a structure of an apparatus for sending a downlink service according to an example of the present invention;
Fig. 20 is a block diagram of a structure of another apparatus for sending a downlink service according to an example of the present invention; and
Fig. 21 is a block diagram of a structure of an apparatus for receiving a downlink service according to an example of the present invention.

### Detailed Description of the Embodiments

Examples of the present invention will be described in detail below with reference to accompanying drawings in conjunction with the examples.

It should be noted that the terms such as "first" and "second" in the description and claims of the present invention and in the drawings are used to distinguish between similar objects and not necessarily to describe a particular order or sequential order.

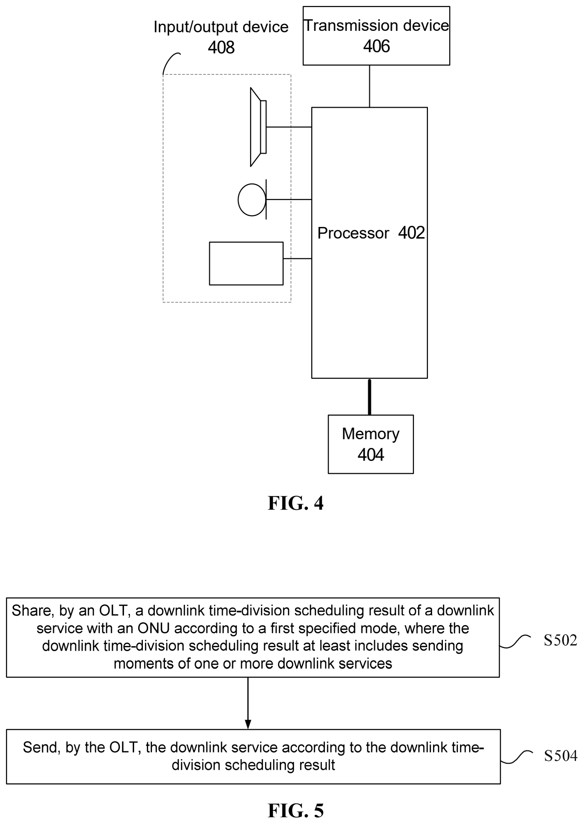

The method examples provided by the examples of the present invention may be executed in a mobile terminal, a computer terminal, or a similar arithmetic unit. With a case of running on a mobile terminal as an instance, Fig. 4 is a block diagram of a hardware structure of a mobile terminal of a method for sending a downlink service and a method for receiving a downlink service according to an example of the present invention. As shown in Fig. 4, the mobile terminal may include one or more (only one is shown in Fig. 1) processors 402 (the processors 402 may include, but are not limited to, processing apparatuses such as a microcontroller unit (MCU) or a field programmable gate array (FPGA), and a memory 404 configured to store data. The mobile terminal may further include a transmission device 406 for a communication function and an input/output device 408. Those of ordinary skill in the art may understand that a structure shown in Fig. 4 is merely illustrative and does not limit a structure of the mobile terminal. For instance, the mobile terminal may further include more or fewer components than those shown in Fig. 4, or have a different configuration from that shown in Fig. 4.

The memory 404 may be configured to store computer programs, and for instance, software programs and modules of application software, such as computer programs corresponding to the method for sending a downlink service and the method for receiving a downlink service in the examples of the present invention. The processor 402 executes various functional applications and data processing by running the computer programs stored in the memory 404. In this case, the method is implemented. The memory 404 may include a high-speed random access memory, or a non-volatile memory, and for instance, one or more magnetic storage apparatuses, flash memories, or other non-volatile solid-state memories. In some instances, the memory 404 may further include a memory remotely arranged with respect to the processor 402. The remote memory may be connected to the mobile terminal through a network. Instances of the network include, but are not limited to, the Internet, an enterprise intranet, a local area network, a mobile communication network, and a combination thereof.

The transmission device 406 is configured to receive or send data through one network. Specific instances of the network may include a wireless network provided by a communication provider of the mobile terminal. In one instance, the transmission device 406 includes one network interface controller (NIC), which may be connected to other network devices through a base station so as to be in communication with the Internet. In one instance, the transmission device 406 may be a radio frequency (RF) module, which is configured to be in wireless communication with the Internet.

The example provides a method for sending a downlink service. Fig. 5 is a flowchart of a method for sending a downlink service according to an example of the present invention. The method is applied to an optical line terminal (OLT). As shown in Fig. 5, the flow includes the following steps S502 to S504.

S502: the optical line terminal (OLT) shares a downlink time-division scheduling result of the downlink service with an optical network unit (ONU) according to a first specified mode. The downlink time-division scheduling result at least includes sending moments of one or more downlink services.

As an optional instance, the downlink time-division scheduling result further includes at least one of the following: sending duration and sending end moments of the one or more downlink services.

It should be noted that, in a case where a sending moment of each downlink service is determined, sending duration and a sending end moment of each downlink service may be calculated.

S502: the OLT sends the downlink service according to the downlink time-division scheduling result.

Through the steps, as the OLT shares the downlink time-division scheduling result of the downlink service with the ONU in advance and the ONU is given a receiving suggestion for receiving the downlink service, the ONU may receive the downlink service sent by the OLT according to the downlink time-division scheduling result. In this way, a problem that the optical network unit cannot efficiently receive the downlink service sent by the optical line terminal is solved, such that the optical network unit can efficiently receive the downlink service sent by the optical line terminal.

In an illustrative example, the first specified mode includes the following steps: the OLT sends the downlink time-division scheduling result at a first specified position of a downlink frame, and the OLT and the ONU agree the downlink time-division scheduling result.

In an illustrative example, the first specified position includes a header of a downlink frame of one service type, and headers or tails of downlink frames of a plurality of service types.

That is, the OLT may send the downlink time-division scheduling result to the ONU at the header of the downlink frame of the one service type, or send the downlink time-division scheduling result to the ONU at the headers or the tails of the downlink frames of the plurality of service types.

In an illustrative example, the optical line terminal (OLT) may set the downlink time-division scheduling result at the header of the downlink frame of the one service type to share the downlink time-division scheduling result of the downlink service with the ONU. The step is implemented in the following mode: in a case where the downlink service is sent based on a downlink frame in one forward error correction (FEC) decoding mode, the OLT sets the downlink time-division scheduling result in a first FEC code block of the downlink frame. The downlink time-division scheduling result is a sending moment and sending duration of the downlink service, or a sending moment and a sending end moment of the downlink service.

As an optional instance, if the plurality of downlink services are sent based on a downlink frame in an FEC decoding mode, the OLT may set the downlink time-division scheduling result (including the sending moment and the sending duration of each downlink service, or the sending moment and the sending end moment of each downlink service) in a first FEC code block of a downlink frame of a downlink service sent first. Optionally, the downlink time-division scheduling result may be set in a frame start (FS) frame header in the first FEC code block.

As an optional instance, the downlink frame is a downlink physical layer (PHY) frame.

That is, in the example, the OLT may send the downlink time-division scheduling result to the ONU in the first FEC code block of the downlink frame of the downlink service sent first. That is, the downlink time-division scheduling results of the plurality of downlink services may be sent to the ONU at one time before the plurality of downlink services are sent to the ONU.

It should be noted that, in this case, the OLT may perform scheduling with all ONU services as a unit, predict downlink services of all ONUs, and allocate an equal weight to each ONU according to service prediction results. Or, the OLT may perform scheduling with a service flow as a unit, schedule each service flow according to its priority and/or weight, and perform collection with the ONU as a unit after scheduling is completed. That is, downlink bandwidths belonging to the same ONU are collected. Downlink time-division scheduling may be implemented through global scheduling based on traffic prediction or global scheduling based on analog sending. Meanwhile, the downlink time-division scheduling result is given in combination with insertion of FEC check.

In an illustrative example, the optical line terminal (OLT) may set the downlink time-division scheduling result at the header of the downlink frame of the one service type to share the downlink time-division scheduling result of the downlink service with the optical network unit (ONU). The step may further be implemented in the following mode: in a case where the plurality of downlink services are sent based on downlink frames in a plurality of FEC decoding modes, the OLT determines a preset FEC code block corresponding to each of the plurality of FEC decoding modes, and sets the downlink time-division scheduling result in each of the preset FEC code blocks, where sending moments and sending duration of the preset FEC code blocks are pre-agreed with the ONU, the downlink time-division scheduling result is the sending moments and sending duration of the plurality of downlink services or the sending moments and sending end moments of the plurality of downlink services other than the preset FEC code blocks, and the downlink time-division scheduling result at least further includes a sending position of the downlink service, which has a same FEC code type as the preset FEC code blocks; and the OLT sets the plurality of preset FEC code blocks at the header of the downlink frame of the one service type.

It should be noted that each preset FEC code block carries an FS frame header, and the FS frame header is provided with the downlink time-division scheduling result.

As an optional instance, the downlink time-division scheduling result in each preset FEC code block at least includes the downlink time-division scheduling result of the downlink service corresponding to the FEC decoding mode.

That is, in the example, the downlink time-division scheduling results of the plurality of downlink services may be sent to the ONU at one time before the plurality of downlink services are sent to the ONU.

In an illustrative example, the optical line terminal (OLT) may set the downlink time-division scheduling result at the headers of the downlink frames of the plurality of service types to share the downlink time-division scheduling result of the downlink service with the optical network unit (ONU). The step includes the following steps: in a case where the plurality of downlink services are sent based on a plurality of downlink frames in a plurality of FEC decoding modes, the OLT determines a preset FEC code block corresponding to each of the plurality of FEC decoding modes, and sets the downlink time-division scheduling result in each of the preset FEC code blocks, where the downlink time-division scheduling result is a sending moment and sending duration of the downlink service or a sending moment and a sending end moment of the downlink service having a same type as the preset FEC code blocks other than the preset FEC code blocks; and the OLT sequentially sets each FEC code block of the plurality of preset FEC code blocks at a header of the downlink frame in the corresponding FEC decoding mode.

It should be noted that, in this case, the plurality of preset FEC code blocks are located at the headers of the downlink frames of the plurality of service types. Each preset FEC code block carries an FS frame header, and the FS frame header is provided with the downlink time-division scheduling result.

As an optional instance, the downlink frame in each FEC decoding mode at least includes the downlink frame of one service type.

As an optional instance, the downlink time-division scheduling result in each preset FEC code block at least includes the downlink time-division scheduling result of the downlink service corresponding to the FEC decoding mode.

That is, in the example, before the downlink service having the same type as the preset FEC code blocks is sent to the ONU, the downlink time-division scheduling results including the type of downlink services are sent to the ONU.

In an illustrative example, the downlink time-division scheduling result may be placed at an end of each FEC code block, so as to indicate start time of a code block consistent with the FEC code type.

It should be noted that, in this case, the OLT may perform scheduling with all ONU services as a unit, predict downlink services of all ONUs, and allocate an equal weight to each ONU according to service prediction results. Or, the OLT may perform scheduling with a service flow as a unit, schedule each service flow according to its priority and/or weight, and perform collection with the ONU as a unit after scheduling is completed. That is, downlink bandwidths belonging to the same ONU are collected. Or, the OLT may collect downlink bandwidths belonging to ONUs in a same type of FEC decoding mode, so as to minimize an idle payload in FEC codewords. Downlink time-division scheduling may be implemented through global scheduling based on traffic prediction or global scheduling based on analog sending. Meanwhile, the downlink time-division scheduling result is given in combination with insertion of FEC check.

In an illustrative example, the optical line terminal (OLT) may set the downlink time-division scheduling result at the tails of the downlink frames of the plurality of service types to share the downlink time-division scheduling result of the downlink service with the optical network unit (ONU). The step includes the following steps: the OLT and the ONU agree a first downlink slot of the downlink frame of each FEC code type; and the OLT sets the downlink time-division scheduling result at a tail of each downlink slot before the OLT completes sending of the corresponding downlink frame in each downlink slot of the downlink frame of each FEC code type according to the downlink time-division scheduling result. The downlink time-division scheduling result is used to indicate start time of a next downlink slot.

It should be noted that when the downlink time-division scheduling result indicates the start time of the next slot at a tail of a current slot, it indicates that sending of the current slot is ended.

That is, for the downlink service corresponding to each FEC decoding mode, downlink time-division scheduling may be implemented through local scheduling based on a current service to give a scheduling result of the current service. Its starting position is a position after sending of a previous service is ended, and a starting position of next sending is given in the scheduling result. As an optional instance, each downlink slot of the downlink frame in each FEC decoding mode at least corresponds to the downlink frame of one service type.

In an illustrative example, downlink time-division scheduling may be implemented through fixed-slot setting. For instance, each FEC code type sends a plurality of codewords in a fixed order.

In an illustrative example, the optical line terminal (OLT) sets the downlink time-division scheduling result at the headers of the downlink frames of the plurality of service types to share the downlink time-division scheduling result of the downlink service with the optical network unit (ONU). The step includes the following step: in a case where the plurality of downlink services are sent based on a plurality of downlink frames in a plurality of modulation modes, the OLT sets the downlink time-division scheduling result in a first downlink sub-frame of the downlink frame in each of the modulation modes. The first downlink sub-frame carries a downlink synchronization header in the corresponding modulation mode. The first downlink sub-frame is located at a header of the downlink frame in each of the modulation modes. The downlink time-division scheduling result is a sending moment and sending duration of the downlink service or a sending moment and a sending end moment of the downlink service in a same type of modulation mode.

As an optional instance, for clock recovery at a receiving side of the ONU, a front portion of the downlink frame may carry a preamble bit, such that the ONU may implement fast clock recovery through the preamble bit. It should be noted that the downlink frame carrying the downlink synchronization header needs to carry downlink bandwidth allocation, and a position of a downlink bandwidth of each ONU on a time axis is given, such that the ONU may search for the downlink synchronization header in a modulation format supported by the ONU, obtain a scheduling result, perform demodulation from the corresponding position, and further parse management and data information.

It should be noted that, in this case, the OLT may perform scheduling with all ONU services as a unit, predict downlink services of all ONUs, and allocate an equal weight to each ONU according to service prediction results. Or, the OLT may perform scheduling with a service flow as a unit, schedule each service flow according to its priority and/or weight, and perform collection with the ONU as a unit after scheduling is completed. That is, downlink bandwidths belonging to the same ONU are collected. Or, the OLT may collect downlink bandwidths belonging to ONUs in a same type of modulation mode. Downlink time-division scheduling may be implemented through global scheduling based on traffic prediction or global scheduling based on analog sending. Meanwhile, the downlink time-division scheduling result is given in combination with different rates and insertion of FEC check.

As an optional instance, the downlink frame in each modulation mode at least includes the downlink frame of one service type.

As an optional instance, the downlink time-division scheduling result may be placed at an end of each FEC code block, so as to indicate start time of a code block consistent with the FEC code type.

In an illustrative example, the OLT may set the downlink time-division scheduling result at the tails of the downlink frames of the plurality of service types to share the downlink time-division scheduling result of the downlink service with the optical network unit (ONU). The step includes the following steps: the OLT determines a start moment of a first downlink slot of the downlink frame in each of the modulation modes according to the downlink synchronization header in each of the modulation modes; and the OLT sets the downlink time-division scheduling result at a tail of each downlink slot before completing sending of the corresponding downlink frame in each downlink slot of the downlink frame in each of the modulation modes according to the downlink time-division scheduling result. The downlink time-division scheduling result is used to indicate start time of a next downlink slot.

It should be noted that when the downlink time-division scheduling result indicates the start time of the next slot at a tail of a current slot, it indicates that sending of the current slot is ended.

That is, for the downlink service corresponding to each modulation mode, downlink time-division scheduling may be implemented through local scheduling based on a current service to give a scheduling result of the current service. Its starting position is a position after sending of a previous service is ended, and a starting position of next sending is given in the scheduling result.

As an optional instance, each downlink slot of the downlink frame in each modulation mode at least corresponds to the downlink frame of one service type.

In an illustrative example, the optical line terminal (OLT) may set the downlink time-division scheduling result at the headers of the downlink frames of the plurality of service types to share the downlink time-division scheduling result of the downlink service with the optical network unit (ONU). The step includes the following step: in a case where the plurality of downlink services are sent based on a plurality of downlink frames at a plurality of line rates, the OLT sets the downlink time-division scheduling result in a second downlink sub-frame of the downlink frame at each of the line rates. The second downlink sub-frame carries a downlink synchronization header at the corresponding line rate. The second downlink sub-frame is located at a header of the downlink frame at each of the line rates. The downlink time-division scheduling result is a sending moment and sending duration of the downlink service or a sending moment and a sending end moment of the downlink service at a same type of line rate.

It should be noted that, in this case, the OLT may perform scheduling with all ONU services as a unit, predict downlink services of all ONUs, and allocate an equal weight to each ONU according to service prediction results. Or, the OLT may perform scheduling with a service flow as a unit, schedule each service flow according to its priority and/or weight, and perform collection with the ONU as a unit after scheduling is completed. That is, downlink bandwidths belonging to the same ONU are collected. Or, the OLT may collect downlink bandwidths belonging to ONUs at a same type of line rate. Downlink time-division scheduling may be implemented through global scheduling based on traffic prediction or global scheduling based on analog sending. Meanwhile, the downlink time-division scheduling result is given in combination with different rates and insertion of FEC check.

As an optional instance, the downlink frame at each line rate at least includes the downlink frame of one service type.

In an illustrative example, the optical line terminal (OLT) sets the downlink time-division scheduling result at the tails of the downlink frames of the plurality of service types to share the downlink time-division scheduling result of the downlink service with the optical network unit (ONU). The step includes the following steps: the OLT determines a start moment of a first downlink slot of the downlink frame at each of the line rates according to the downlink synchronization header at each of the line rates; and the OLT sets the downlink time-division scheduling result at a tail of each downlink slot before completing sending of the corresponding downlink frame in each downlink slot of the downlink frame at each of the line rates according to the downlink time-division scheduling result. The downlink time-division scheduling result is used to indicate start time of a next downlink slot.

It should be noted that when the downlink time-division scheduling result indicates the start time of the next slot at a tail of a current slot, it indicates that sending of the current slot is ended.

That is, for the downlink service corresponding to each line rate, downlink time-division scheduling may be implemented through local scheduling based on a current service to give a scheduling result of the current service. Its starting position is a position after sending of a previous service is ended, and a starting position of next sending is given in the scheduling result.

As an optional instance, each downlink slot of the downlink frame at each line rate at least corresponds to the downlink frame of one service type.

In an illustrative example, downlink time-division scheduling results of all the downlink services may be pre-agreed with the ONU.

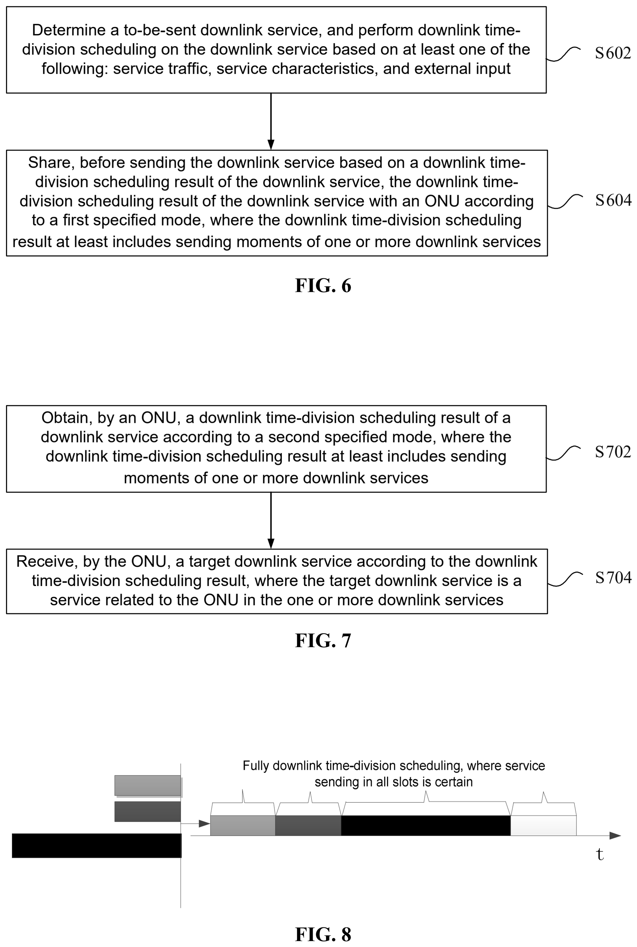

The example further provides a method for sending a downlink service. Fig. 6 is a flowchart of a method for sending a downlink service according to an example of the present invention. The method is applied to an optical line terminal (OLT). As shown in Fig. 6, the flow includes the following steps S602 to S604.

S602: a to-be-sent downlink service is determined, and downlink time-division scheduling is performed on the downlink service based on at least one of the following: service traffic, service characteristics, and external input.

It should be noted that the to-be-sent downlink services include one or more downlink services. The to-be-sent downlink services are downlink services to be sent to one or more ONUs.

S604: before the downlink service is sent based on a downlink time-division scheduling result of the downlink service, the downlink time-division scheduling result of the downlink service is shared with the ONU according to a first specified mode. The downlink time-division scheduling result at least includes sending moments of one or more downlink services.

As an optional instance, the downlink time-division scheduling result further includes at least one of the following: sending duration and sending end moments of the one or more downlink services.

Through the steps, as the OLT shares the downlink time-division scheduling result of the downlink service with the ONU in advance and the ONU is given a receiving suggestion for receiving the downlink service, the ONU may receive the downlink service sent by the OLT according to the downlink time-division scheduling result. In this way, a problem that the optical network unit cannot efficiently receive the downlink service sent by the optical line terminal is solved, such that the optical network unit can efficiently receive the downlink service sent by the optical line terminal.

In an illustrative example, the step that downlink time-division scheduling is performed on the downlink service based on the service traffic includes the following steps: service traffic of each downlink service is predicted; a bandwidth is allocated to each downlink service according to the service traffic of each downlink service, and a priority and/or a weight of each downlink service; and the downlink time-division scheduling result is determined according to the bandwidth allocated to each downlink service. The downlink time-division scheduling result is a sending moment and sending duration, or a sending moment and a sending end moment of each downlink service.

That is, in the example, global scheduling based on traffic prediction may be used to predict service traffic of each of the plurality of downlink services, and then allocate a bandwidth to each downlink service according to factors such as priorities and weights within a total downlink bandwidth range, so as to form the downlink time-division scheduling result.

In an illustrative example, the step that downlink time-division scheduling is performed on the downlink service based on the service traffic includes the following steps: service traffic of each downlink service is predicted; and local scheduling is performed on each downlink service according to the service traffic of each downlink service, and a sending length of each downlink service is determined. The downlink time-division scheduling result includes a sending moment and a sending length of each downlink service.

That is, in the example, a current service may be locally scheduled based on traffic prediction, and a scheduling result of the current service may be given.

In an illustrative example, the step that the service traffic of each downlink service is predicted may be implemented in the following mode: a cache data volume of each downlink service is obtained; and the service traffic of each downlink service is predicted according to the cache data volume of each downlink service, a historical data transmission volume of each downlink service, and a historical scheduling result.

In an illustrative example, the step that downlink time-division scheduling is performed on the downlink service based on the service characteristics includes the following steps: in a case where the downlink service includes a low-latency service, a fixed slot is allocated to the low-latency service, and a first scheduling result is obtained, where allowed latency time of the low-latency service is less than a preset threshold; and downlink time-division scheduling is performed on a downlink service except the low-latency service in the downlink services, and a second scheduling result is obtained. The downlink time-division scheduling result includes the first scheduling result and the second scheduling result. The downlink time-division scheduling result is a sending moment and sending duration or a sending moment and a sending end moment of the low-latency service and/or another downlink service.

In an illustrative example, after the first scheduling result is obtained, a bandwidth of the low-latency service may be split according to the first scheduling result, and the downlink time-division scheduling result may be re-determined according to a splitting result.

That is, in the example, when a passive optical network carries the low-latency service, a low-latency jitter characteristic of a service may be achieved by specifying a slot position carrying the low-latency service. Or, a low-latency characteristic of a service may be achieved by increasing a frequency of bandwidth allocation to the low-latency service and ensuring that an interval between adjacent bandwidths does not exceed specified duration.

The OLT may specify a slot through fixed-slot allocation, so as to carry the low-latency service. Other slots may use other time-division multiplexing (TDM) scheduling mechanisms, which include, but are not limited to, downlink time-division scheduling, priority and weight based downlink scheduling, etc.

In an illustrative example, the step that downlink time-division scheduling is performed on the downlink service based on external input includes the following steps: a fixed slot of each downlink service in the external input is obtained, and the downlink time-division scheduling result is obtained.

That is, in the example, a default fixed slot may be set for each downlink service through external settings, software settings, cooperative dynamic bandwidth allocation (Co-DBA), etc., so as to implement downlink time-division scheduling.

In an illustrative example, based on global scheduling based on analog sending, analog sending may be performed on each of the plurality of downlink services according to factors such as priorities and weights, so as to form an analog sending result, and then the analog sending result may be used as the downlink time-division scheduling result.

In an illustrative example, before downlink time-division scheduling is performed on the downlink service, the method further includes one of the following steps:
a downlink service corresponding to each ONU is determined; predicted service traffic of the downlink service corresponding to each ONU is predicted; and a bandwidth is allocated to each ONU according to the predicted service traffic corresponding to each ONU and the weight of each ONU; and
the downlink services are scheduled according to priorities and/or weights, and a bandwidth corresponding to each downlink service is determined; and bandwidths of downlink services corresponding to a same ONU are collected, bandwidths of downlink services corresponding to ONUs in a same forward error correction (FEC) decoding mode are collected, bandwidths of downlink services corresponding to ONUs in a same modulation mode are collected, or bandwidths of downlink services corresponding to ONUs at a same line rate are collected.

That is, in the example, the OLT may perform scheduling with all ONU services as a unit, predict downlink services of all ONUs, and allocate an equal weight to each ONU according to service prediction results. Or, the OLT may perform scheduling with a service flow as a unit, schedule each service flow according to its priority and/or weight, and perform collection with the ONU as a unit after scheduling is completed. That is, downlink bandwidths belonging to the same ONU are collected. Or, downlink bandwidths belonging to ONUs in a same type of FEC decoding mode may be collected, so as to minimize an idle payload in FEC codewords. Or, downlink bandwidths belonging to ONUs in a same type of modulation mode may be collected. Or, downlink bandwidths belonging to ONUs at a same type of line rate may be collected.

In an illustrative example, the downlink service is sent based on the downlink time-division scheduling result of the downlink service. The step may be implemented in the following mode: a first slot corresponding to a first type of downlink service is determined according to the downlink time-division scheduling result, and the first type of downlink service is sent in the first slot, where the first type of downlink service includes one downlink service; and/or a second slot corresponding to a second type of downlink services is determined according to the downlink time-division scheduling result, and the plurality of downlink services are sent according to a priority and/or a weight of each of the plurality of downlink services in the second slot. The second type of downlink services include the plurality of downlink services.

That is, in the example, the downlink service for downlink time-division scheduling may be one type of downlink services (including a plurality of downlink services) or one downlink service. If the downlink services for downlink time-division scheduling are one type of downlink services, the services are sent in a slot of downlink time-division scheduling of the type of downlink services in a priority-based and/or weight-based scheduling mode.

In an illustrative example, after the downlink service is sent based on the downlink time-division scheduling result of the downlink service, the method further includes the following step: the downlink service is sent in a slot other than the downlink time-division scheduling result in a target scheduling mode. The target scheduling mode includes a priority-based scheduling mode and a weight-based scheduling mode.

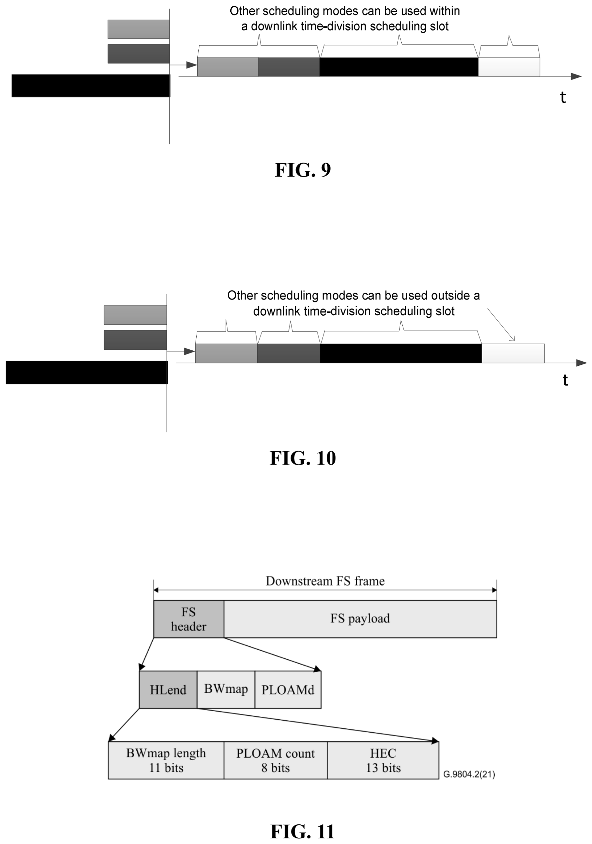

That is, in the example, after downlink time-division scheduling is introduced, working may be performed in a fully downlink time-division scheduling mode. That is, all slots are results of downlink time-division scheduling, and how to send services in the slots generated by downlink time-division scheduling is completely determined, as shown in Fig. 8. Or, working may be performed in a hybrid mode of downlink time-division scheduling and other scheduling modes, which includes sending a service in a slot of downlink time-division scheduling in priority and weight based scheduling modes, as shown in Fig. 9, or sending a service in a slot other than a downlink time-division scheduling slot in priority and weight based scheduling modes, as shown in Fig. 10.

The example further provides a method for receiving a downlink service. Fig. 7 is a flowchart of sending and receiving of a downlink service according to an example of the present invention. The method is applied to an ONU. As shown in Fig. 7, the flow includes the following steps S702 to S704.

S702: the ONU obtains a downlink time-division scheduling result of the downlink service according to a second specified mode. The downlink time-division scheduling result at least includes sending moments of one or more downlink services.

As an optional instance, the downlink time-division scheduling result further includes at least one of the following: sending duration and sending end moments of the one or more downlink services.

S704: the ONU receives a target downlink service according to the downlink time-division scheduling result. The target downlink service is a service related to the ONU in the one or more downlink services.

Through the steps, as the ONU obtains the downlink time-division scheduling result before receiving the target downlink service, the ONU may receive the downlink service sent by an OLT according to the downlink time-division scheduling result. In this way, a problem that the optical network unit cannot efficiently receive the downlink service sent by the optical line terminal is solved, such that the optical network unit can efficiently receive the downlink service sent by the optical line terminal.

In an illustrative example, the second specified mode includes the following steps: the ONU obtains the downlink time-division scheduling result at a second specified position of a downlink frame, and an OLT and the ONU agree the downlink time-division scheduling result.

In an illustrative example, the second specified position includes a header or a tail of the downlink frame.

In an illustrative example, the ONU obtains the downlink time-division scheduling result of the downlink service from the header of the downlink frame. The step includes the following steps: the ONU parses the received downlink frame, and obtains a frame header of an FS frame from a first FEC code block in the downlink frame; and the downlink time-division scheduling result is obtained from the frame header of the FS frame. The downlink time-division scheduling result is a sending moment and sending duration of the target downlink service, or a sending moment and a sending end moment of the target downlink service.

It should be noted that in a case where the plurality of downlink services are sent based on the downlink frame in the FEC decoding mode, the OLT may set the downlink time-division scheduling result in the FS frame header of the first FEC code block of the downlink frame. Further, the ONU may parse the downlink frame, obtain the frame header of the FS frame from the first FEC code block of the downlink frame, and obtain the downlink time-division scheduling result from the frame header of the FS frame.

In an illustrative example, the ONU obtains the downlink time-division scheduling result of the downlink service from the header of the downlink frame. The step includes the following steps: the ONU parses the received downlink frame, and determines a target preset FEC code block corresponding to an FEC decoding mode corresponding to the ONU from a plurality of preset FEC code blocks at the header of the downlink frame; and the downlink time-division scheduling result is obtained from the target preset FEC code block. A sending moment and duration of the target preset FEC code block are pre-agreed. The downlink time-division scheduling result is a sending moment and sending duration of the target downlink service or a sending moment and a sending end moment of the target downlink service other than the target preset FEC code block.

It should be noted that in a case where the plurality of downlink services are sent based on the downlink frames in the plurality of FEC decoding modes, the OLT may set the corresponding downlink time-division scheduling result in the preset FEC code block corresponding to each FEC decoding mode, and set the plurality of preset FEC code blocks at the header of the downlink frame sent first. Further, the ONU may parse the received downlink frame, determine the target preset FEC code block corresponding to the FEC decoding mode corresponding to the ONU itself from the plurality of preset FEC code blocks at the header of the downlink frame, and obtain the downlink time-division scheduling result from the target preset FEC code block.

In an illustrative example, the ONU obtains the downlink time-division scheduling result of the downlink service from the header of the downlink frame. The step includes the following steps: the ONU searches a plurality of received downlink frames for a target downlink frame, where a preset FEC code block at a header of the target downlink frame corresponds to an FEC decoding mode corresponding to the ONU; and the downlink time-division scheduling result is obtained from the preset FEC code block at the header of the target downlink frame. A sending moment and duration of the preset FEC code block are pre-agreed with the OLT. The downlink time-division scheduling result is a sending moment and sending duration of the target downlink service or a sending moment and a sending end moment of the target downlink service other than the preset FEC code block.

It should be noted that in a case where the plurality of downlink services are sent based on the plurality of downlink frames in the plurality of FEC decoding modes, the corresponding downlink time-division scheduling result may be set in the preset FEC code block corresponding to each FEC decoding mode, and each FEC code block of the plurality of preset FEC code blocks may be sequentially set at the header of the downlink frame in the corresponding FEC decoding mode. Further, the ONU may search the plurality of received downlink frames for the target downlink frame (the preset FEC code block at the header of the target downlink frame corresponds to the FEC decoding mode corresponding to the ONU), and obtain the downlink time-division scheduling result of the target downlink service from the preset FEC code block at the header of the target downlink frame.

In an illustrative example, the ONU obtains the downlink time-division scheduling result of the downlink service from the tail of the downlink frame. The step includes the following step: the ONU obtains the downlink time-division scheduling result from a tail of each downlink slot of a downlink frame of each FEC code type. The downlink time-division scheduling result is used to indicate start time of a next downlink slot. A first downlink slot of the downlink frame of each FEC code type is pre-agreed with the OLT.

It should be noted that the OLT may set the downlink time-division scheduling result at the tail of each downlink slot before the OLT completes sending of the corresponding downlink frame in each downlink slot of the downlink frame of each FEC code type according to the downlink time-division scheduling result. Thus, the ONU may obtain the downlink time-division scheduling result from the tail of each downlink slot of the downlink frame of each FEC code type.

In an illustrative example, the ONU obtains the downlink time-division scheduling result of the downlink service from the header of the downlink frame. The step includes the following steps: the ONU searches a plurality of received downlink frames for a target downlink frame, where a modulation mode of the target downlink frame corresponds to a modulation mode of the ONU; and the downlink time-division scheduling result is obtained from a first downlink sub-frame of the target downlink frame. The first downlink sub-frame carries a downlink synchronization header in the modulation mode corresponding to the target downlink frame. The first downlink sub-frame is located at a header of the target downlink frame. The downlink time-division scheduling result is a sending moment and sending duration of the target downlink service or a sending moment and a sending end moment of the target downlink service in a same type of modulation mode.

It should be noted that in a case where the plurality of downlink services are sent based on the plurality of downlink frames in the plurality of modulation modes, the OLT sets the downlink time-division scheduling result of the downlink service in the same type of modulation mode in the first downlink sub-frame of the downlink frame in the corresponding modulation mode (the first downlink sub-frame carries the downlink synchronization header in the corresponding modulation mode, and the first downlink sub-frame is located at the header of the downlink frame in each modulation mode). Further, the ONU may search the plurality of received downlink frames for the target downlink frame (the modulation mode of the target downlink frame corresponds to the modulation mode of the ONU), and obtain the downlink time-division scheduling result of the target downlink service from the first downlink sub-frame of the target downlink frame.

In an illustrative example, the ONU obtains the downlink time-division scheduling result of the downlink service from the tail of the downlink frame. The step includes the following step: the ONU obtains the downlink time-division scheduling result from a tail of each downlink slot of a downlink frame in each modulation mode. The downlink time-division scheduling result indicates a start moment of a next downlink slot. A start moment of a first downlink slot of the downlink frame in each modulation mode is determined according to a downlink synchronization header in the corresponding modulation mode.

It should be noted that the OLT may set the downlink time-division scheduling result at the tail of each downlink slot before the OLT completes sending of the corresponding downlink frame in each downlink slot of the downlink frame in each modulation mode according to the downlink time-division scheduling result. Thus, the ONU may obtain the downlink time-division scheduling result from the tail of each downlink slot of the downlink frame in each modulation mode.

In an illustrative example, the ONU obtains the downlink time-division scheduling result of the downlink service from the header of the downlink frame. The step includes the following steps: the ONU searches a plurality of received downlink frames for a target downlink frame, where a line rate of the target downlink frame corresponds to a line rate corresponding to the ONU; and the downlink time-division scheduling result is obtained from a second downlink sub-frame of the target downlink frame. The second downlink sub-frame carries a downlink synchronization header at the line rate corresponding to the target downlink frame. The second downlink sub-frame is located at a header of the target downlink frame. The downlink time-division scheduling result is a sending moment and sending duration of the target downlink service or a sending moment and a sending end moment of the target downlink service in a same type of line rate mode.

It should be noted that in a case where the plurality of downlink services are sent based on the plurality of downlink frames at the plurality of line rates, the OLT sets the downlink time-division scheduling result of the downlink service at the same type of line rate in the second downlink sub-frame of the downlink frame at the corresponding line rate (the second downlink sub-frame carries the downlink synchronization header at the corresponding line rate, and the second downlink sub-frame is located at the header of the downlink frame at each line rate). Further, the ONU may search the plurality of received downlink frames for the target downlink frame (the line rate of the target downlink frame corresponds to the line rate of the ONU), and obtain the downlink time-division scheduling result of the target downlink service from the second downlink sub-frame of the target downlink frame.

In an illustrative example, the ONU obtains the downlink time-division scheduling result of the downlink service from the tail of the downlink frame. The step includes the following step: the ONU obtains the downlink time-division scheduling result from a tail of each downlink slot of a downlink frame at each line rate. The downlink time-division scheduling result indicates a start moment of a next downlink slot. A start moment of a first downlink slot of the downlink frame at each line rate is determined according to a downlink synchronization header at the corresponding line rate.

It should be noted that the OLT may set the downlink time-division scheduling result at the tail of each downlink slot before the OLT completes sending of the corresponding downlink frame in each downlink slot of the downlink frame at each line rate according to the downlink time-division scheduling result. Thus, the ONU may obtain the downlink time-division scheduling result from the tail of each downlink slot of the downlink frame at each line rate.

In an illustrative example, the step that the ONU receives the target downlink service according to the downlink time-division scheduling result may be implemented in the following mode: the ONU determines a receiving start moment and a receiving end moment of the target downlink service according to the downlink time-division scheduling result; the ONU parses a downlink frame received at a current moment at the receiving start moment, and receives the target downlink service; and the ONU stops parsing of the downlink frame received at the current moment at the receiving end moment, and stops receiving of the target downlink service.

In an illustrative example, the step that the ONU parses the downlink frame received at the current moment at the receiving start moment includes at least one of the following steps: the received downlink frame is parsed according to an FEC decoding mode corresponding to the ONU at the receiving start moment; the received downlink frame is parsed according to a modulation mode corresponding to the ONU at the receiving start moment; and the received downlink frame is parsed according to a line rate corresponding to the ONU at the receiving start moment.

Obviously, the examples described above are merely some examples rather than all examples of the present invention. In order to better understand the method, the above process will be described below in combination with the examples, which are not intended to limit the technical solution of the examples of the present invention. Optionally,

According to the present invention, the downlink service may be pre-scheduled based on a time dimension, and the downlink time-division scheduling result may be given. That is, in a downlink direction, downlink time-division scheduling is introduced, and simultaneous scheduling and sending is changed to pre-scheduling based on a time dimension. The downlink time-division scheduling result is output, the downlink time-division scheduling result is sent before data, and then the downlink service is sent.

Optionally, the OLT may pre-schedule all the downlink services in combination with various downlink service situations, and give pre-scheduling results (that is, sending moments and sending duration or sending moments and sending end moments of the services in a future period). Then, the OLT sends the pre-scheduling results on a downlink channel, and sends corresponding services in corresponding time periods. In the corresponding time periods, if a plurality of services need to be sent, through priority-based and/or weight-based scheduling, the ONU may receive and process the corresponding services in the corresponding time periods according to the pre-scheduling results.

After downlink time-division scheduling is introduced, working may be performed in a fully downlink time-division scheduling mode. That is, all slots are results of downlink time-division scheduling, and how to send services in the slots generated by downlink time-division scheduling is completely determined, as shown in Fig. 8. Or, working may be performed in a hybrid mode of downlink time-division scheduling and other scheduling modes, which includes sending a service in a slot of downlink time-division scheduling in priority and weight based scheduling modes, as shown in Fig. 9, or sending a service in a slot other than a downlink time-division scheduling slot in priority and weight based scheduling modes, as shown in Fig. 10.

Optionally, the downlink time-division scheduling may be implemented in the following embodiments:
Embodiment 1: Global scheduling based on traffic prediction may be used to obtain cache data volumes of all services, predict service traffic of the services in combination with actual historical transmission volumes of the services, utilization of scheduling results and other data, and then allocate a bandwidth to each service according to factors such as priorities and weights within a total downlink bandwidth range, so as to form a downlink time-division scheduling result.
Embodiment 2: Global scheduling based on analog sending may be used to perform analog sending on the services according to factors such as priorities and weights, so as to form an analog sending result, and then use the analog sending result as a pre-scheduling result.
Embodiment 3: Local scheduling based on a current service may be used to give a scheduling result of the current service.
Embodiment 4: A default fixed slot is set through external settings, software settings, Co-DBA, etc.
Embodiment 5: The scheduling result is split to increase a frequency of service sending.

For better understanding, detailed description will be provided below through optional examples.

### Example 1: ONU receiving energy-saving

In a downlink direction, a TDM mode is used to send a service. For an ONU, only a small part of downlink services belong to one ONU. In a current standard design, the ONU needs to parse an entire downlink frame, which includes FEC decoding and XGEM frame header parsing. The XGEM frame header parsing includes hybrid error correction (HEC) decoding. Finally, a service belonging to the ONU is filtered. As downlink is a TDM mode, downlink time-division scheduling may be used to give and send a scheduling result. In this way, the ONU accurately receives its own service according to the scheduling result, such that the ONU can not care about and parse a service that does not belong to the ONU, so as to achieve high efficiency and energy saving.

The OLT may perform scheduling with all ONU services as a unit, predict downlink services of all ONUs, and allocate an equal weight to each ONU according to service prediction results. Or, the OLT may perform scheduling with a service flow as a unit, schedule each service flow according to its priority and/or weight, and perform collection with the ONU as a unit after scheduling is completed. That is, downlink bandwidths belonging to the same ONU are collected. Downlink time-division scheduling may be implemented through global scheduling based on traffic prediction or global scheduling based on analog sending. Meanwhile, the downlink time-division scheduling result is given in combination with insertion of FEC check.

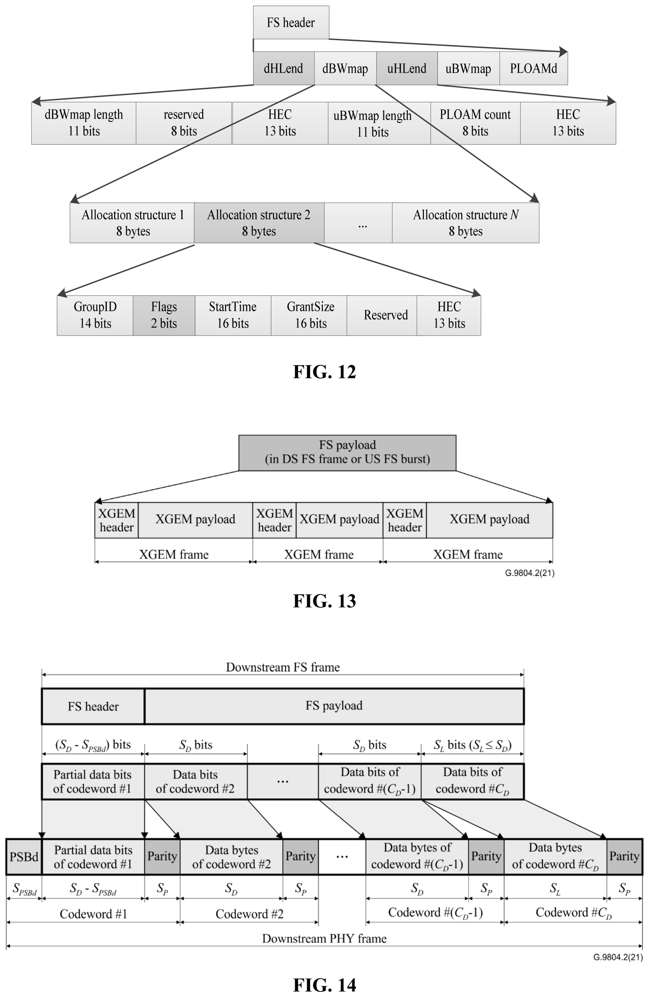

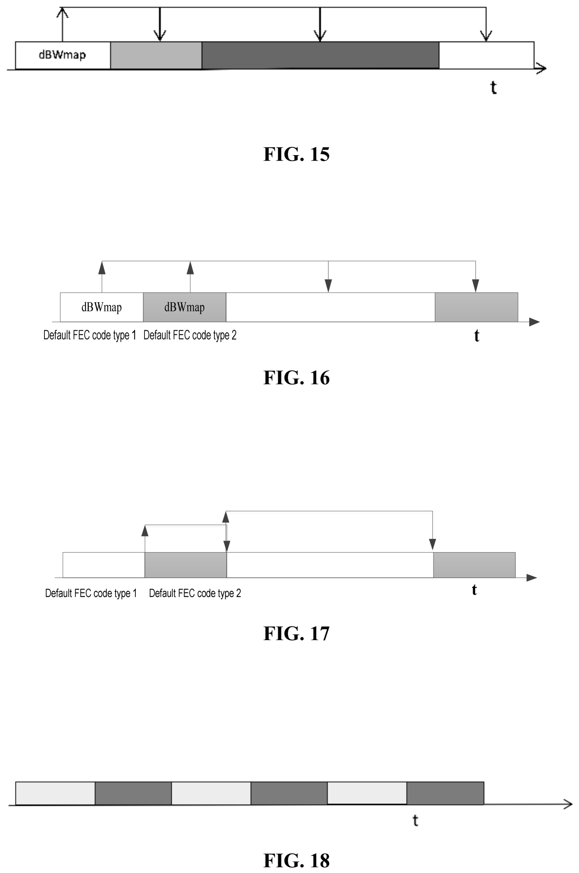

According to the scheduling result, the OLT gives a position of a downlink bandwidth of each ONU in an FS frame, that is, a position of a GEM frame in the FS frame as shown in Fig. 13 or a position of a GEM frame in a PHY frame (that is, the downlink frame) as shown in Fig. 14. According to the scheduling result, the ONU calculates which FEC codeword starts decoding, and starts to parse a GEM frame header from the corresponding position and obtains a corresponding GEM payload after decoding. Clearly, the OLT needs to give the downlink time-division scheduling result and a position. The ONU needs to parse the downlink time-division scheduling result first, and the downlink time-division scheduling result may be placed in an FS header. In an improved FS frame header as shown in Fig. 12 (Fig. 11 illustratively shows a traditional FS frame header), a position is a default, and length information may be indicated by a dLend domain, including information such as dBWmap length. As the FS frame header is generally in one FEC codeword, the ONU generally needs to parse a first FEC code block in a downlink PHY frame to obtain a downlink scheduling result. As shown in Fig. 15, Fig. 15 illustratively shows indication of each ONU slot by the downlink time-division scheduling result.

### Example 2: Downlink flexible FEC

In a same optical distribution network (ODN), different ONUs are connected to different branch optical fibers, different branch optical fibers pass different optical splitters, and the branch optical fibers have different lengths. Thus, different line loss is caused. During reception, the ONUs may obtain different error correction gains in FEC decoding modes with different error correction capabilities, and accordingly bring different bandwidth efficiency. As the ONU itself may support various FEC decoding modes, corresponding FEC decoding modes may be used according to configuration of an OLT, or the plurality of ONUs have different FEC decoding modes. As downlink is a TDM mode, downlink time-division scheduling may be used to give the scheduling result, and a prompt of the FEC decoding mode is given based on the scheduling result. In this way, the ONU can accurately decode and receive its own service in the corresponding FEC decoding mode according to the scheduling result and the FEC decoding mode. Thus, the ONU can not care about and parse a service that does not belong to the ONU itself, so as to achieve flexible error correction gains and flexible bandwidth efficiency.

The OLT may perform scheduling with all ONU services as a unit, predict downlink services of all ONUs, and allocate an equal weight to each ONU according to service prediction results. Or, the OLT may perform scheduling with a service flow as a unit, schedule each service flow according to its priority and/or weight, and perform collection with the ONU as a unit after scheduling is completed. That is, downlink bandwidths belonging to the same ONU are collected. Or, the OLT may collect downlink bandwidths belonging to ONUs in a same type of FEC decoding mode, so as to minimize an idle payload in FEC codewords. Downlink time-division scheduling may be implemented through global scheduling based on traffic prediction or global scheduling based on analog sending. Meanwhile, the downlink time-division scheduling result is given in combination with insertion of FEC check. Downlink time-division scheduling may be implemented through local scheduling based on a current service to give a scheduling result of the current service. Its starting position is a position after sending of a previous service is ended, and a starting position of next sending is given in the scheduling result. Clearly, downlink time-division scheduling may be implemented through fixed-slot setting. For instance, each FEC code type sends a plurality of codewords in a fixed order.

According to the scheduling result, the OLT gives the downlink bandwidth corresponding to each FEC decoding mode and a position of the downlink bandwidth of the ONU in a PHY frame. According to the scheduling result, the ONU calculates which FEC code block starts decoding, and starts to parse a GEM frame header from the corresponding position and obtains a corresponding GEM payload after decoding. Clearly, the ONU needs to parse the downlink time-division scheduling result first. The downlink time-division scheduling result may be put in the FS header. A plurality of code blocks at a header of the PHY frame use a default FEC code type, and each default code block carries an FS header. Thus, the ONU generally needs to parse one FEC code block, corresponding to its own FEC decoding mode, at the header of the downlink PHY frame first. The downlink time-division scheduling result may be placed at an end of each FEC code block, so as to indicate start time of a code block consistent with the FEC code type. Fig. 16 is a schematic diagram of global downlink time-division scheduling. Fig. 17 is a schematic diagram of local downlink time-division scheduling. Fig. 18 is a schematic diagram of default downlink time-division scheduling, where slots of all downlink services are fixed.

### Example 3: Flexible downlink rate

In a same ODN, different ONUs are connected to different branch optical fibers, different branch optical fibers pass different optical splitters, and the branch optical fibers have different lengths. Thus, different line loss is caused. An OLT and the ONUs on different branch optical fibers may use different modulation modes to achieve different rates. As the ONU itself may support various modulation modes, corresponding modulation modes may be used according to configuration of the OLT, or the plurality of ONUs have different modulation modes. As downlink is a TDM mode, downlink time-division scheduling may be used to give the scheduling result, and a prompt of the modulation mode is given based on the scheduling result. In this way, the ONU can accurately decode and receive its own service in the corresponding modulation mode according to the scheduling result and the modulation mode. Thus, the ONU can not care about and parse a service that does not belong to the ONU itself, so as to achieve flexible bandwidth capabilities.

The OLT may perform scheduling with all ONU services as a unit, predict downlink services of all ONUs, and allocate an equal weight to each ONU according to service prediction results. Or, the OLT may perform scheduling with a service flow as a unit, schedule each service flow according to its priority and/or weight, and perform collection with the ONU as a unit after scheduling is completed. That is, downlink bandwidths belonging to the same ONU are collected. Or, the OLT may collect downlink bandwidths belonging to ONUs in a same type of modulation mode. Downlink time-division scheduling may be implemented through global scheduling based on traffic prediction or global scheduling based on analog sending. Meanwhile, the downlink time-division scheduling result is given in combination with different rates and insertion of FEC check. Downlink time-division scheduling may be implemented through local scheduling based on a current service to give a scheduling result of the current service. Its starting position is a position after sending of a previous service is ended, and a starting position of next sending is given in the scheduling result. Clearly, downlink time-division scheduling may be implemented through fixed-slot setting. For instance, each modulation format sends a plurality of pieces of length data in a fixed order.

According to the scheduling result, the OLT sends downlink frames in different modulation modes separately. For clock recovery at a receiving side of the ONU, a front portion of the downlink frame may carry a preamble bit, such that the ONU may implement fast clock recovery through the preamble bit. At least some downlink frames carry downlink synchronization headers corresponding to a modulation format, and the downlink frames carrying the downlink synchronization headers carry downlink bandwidth allocation. A position of a downlink bandwidth of each ONU on a time axis is given, such that the ONU may search for the downlink synchronization header in a modulation format supported by the ONU, obtain a scheduling result, perform demodulation from the corresponding position, and further parse management and data information. Or, the downlink time-division scheduling result may be placed at an end of each FEC code block, so as to indicate start time of a code block same as the FEC code type.

It should be noted that in a downlink bandwidth that does not belong to the ONU itself, if the ONU cannot obtain clock synchronization, a previously recovered downlink clock may be kept, and then the downlink clock is recovered or the previously kept clock is adjusted when the ONU reaches its own downlink bandwidth.

### Example 4: Time division duplex coexistence

An embodiment of time division duplex coexistence is similar to Example 3. They have a same modulation mode of not return to zero (NRZ), and different line rates for different services. That is, different modulation formats in Example 3 need to be changed to different line rates, which will not be repeated in the example of the present invention.

### Example 5: Low-latency service carrying

When a passive optical network carries the low-latency service, a low-latency jitter characteristic of a service may be achieved by specifying a slot position carrying the low-latency service. Or, a low-latency characteristic of a service may be achieved by increasing a frequency of bandwidth allocation to the low-latency service and ensuring that an interval between adjacent bandwidths does not exceed specified duration.

The OLT may specify a slot through fixed-slot allocation, so as to carry the low-latency service. Other slots may use other TDM scheduling mechanisms, which include downlink time-division scheduling, priority and weight based downlink scheduling, etc.

The OLT may perform scheduling with all ONU services as a unit, predict downlink services of all ONUs, and allocate an equal weight to each ONU according to service prediction results. Or, the OLT may perform scheduling with a service flow as a unit, schedule each service flow according to its priority and/or weight, and perform collection with the ONU as a unit after scheduling is completed. Scheduling results of the low-latency services are split and distributed as evenly as possible, such that the interval between the adjacent slots does not exceed the specified duration. Clearly, the split bandwidths and the downlink bandwidths belonging to the same ONU may still be collected. Downlink time-division scheduling may be implemented through global scheduling based on traffic prediction or global scheduling based on analog sending, and the downlink time-division scheduling result is given.

### Example 6: Hybrid mode

That is, the above examples may be flexibly combined, which will not be repeated in the example of the present invention.

From the description of the embodiments, those skilled in the art can clearly understand that the methods according to the examples can be implemented through software plus a necessary general-purpose hardware platform, or through hardware. In most cases, the former is a better embodiment. With such understanding, the technical solution of the present invention, in essence or from the view of part contributing to the prior art, can be embodied in a form of a software product. The computer software product is stored in one storage medium (for instance, a read-only memory (ROM)/a random access memory (RAM), a magnetic disk, or an optical disk), and includes a plurality of instructions configured to make one terminal device (which may be a mobile phone, a computer, a server, a network device, etc.) execute the method according to each of the examples of the present invention.

The example further provides an apparatus for sending a downlink service and an apparatus for receiving a downlink service. The apparatus for sending a downlink service and the apparatus for receiving a downlink service are configured to implement the above examples and preferred embodiments, which will not be repeated herein. The term "module", as used below, may implement a combination of software and/or hardware having predetermined functions. While a middleware device described in the following examples is preferably implemented in a software form, implementation in a form of hardware or a combination of software and hardware is possible and conceivable.

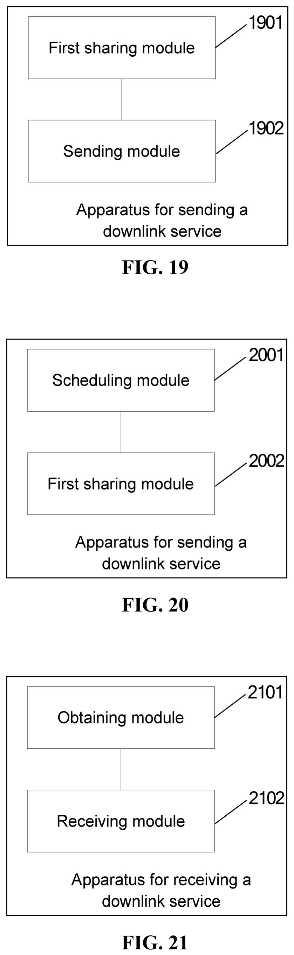

Fig. 19 is a block diagram of a structure of an apparatus for sending a downlink service according to an example of the present invention. As shown in Fig. 19, the apparatus for sending a downlink service includes:
a first sharing module 1901 configured to share a downlink time-division scheduling result of the downlink service with an optical network unit (ONU) according to a first specified mode, where the downlink time-division scheduling result at least includes sending moments of one or more downlink services; and
a sending module 1902 configured to send the downlink service according to the downlink time-division scheduling result.

Through the apparatus, as the OLT shares the downlink time-division scheduling result of the downlink service with the ONU in advance and the ONU is given a receiving suggestion for receiving the downlink service, the ONU may receive the downlink service sent by the OLT according to the downlink time-division scheduling result. In this way, a problem that the optical network unit cannot efficiently receive the downlink service sent by the optical line terminal is solved, such that the optical network unit can efficiently receive the downlink service sent by the optical line terminal.

In an illustrative example, the first specified mode includes the following steps: the OLT sends the downlink time-division scheduling result at a first specified position of a downlink frame, and the OLT and the ONU agree the downlink time-division scheduling result.

In an illustrative example, the first specified position includes a header of a downlink frame of one service type, and headers or tails of downlink frames of a plurality of service types.

In an illustrative example, the apparatus is further configured to set, in a case where the downlink service is sent based on a downlink frame in one forward error correction (FEC) decoding mode, the downlink time-division scheduling result in a first FEC code block of the downlink frame. The downlink time-division scheduling result is a sending moment and sending duration of the downlink service, or a sending moment and a sending end moment of the downlink service.

In an illustrative example, the apparatus is further configured to determine, in a case where the plurality of downlink services are sent based on downlink frames in a plurality of FEC decoding modes, a preset FEC code block corresponding to each of the plurality of FEC decoding modes, and set the downlink time-division scheduling result in each of the preset FEC code blocks, where sending moments and sending duration of the preset FEC code blocks are pre-agreed with the ONU, the downlink time-division scheduling result is the sending moments and sending duration of the plurality of downlink services or the sending moments and sending end moments of the plurality of downlink services other than the preset FEC code blocks, and the downlink time-division scheduling result at least further includes a sending position of the downlink service, which has a same FEC code type as the preset FEC code blocks; and set the plurality of preset FEC code blocks at the header of the downlink frame of the one service type.

In an illustrative example, the apparatus is further configured to determine, in a case where the plurality of downlink services are sent based on a plurality of downlink frames in a plurality of FEC decoding modes, a preset FEC code block corresponding to each of the plurality of FEC decoding modes, and set the downlink time-division scheduling result in each of the preset FEC code blocks, where the downlink time-division scheduling result is a sending moment and sending duration of the downlink service or a sending moment and a sending end moment of the downlink service having a same type as the preset FEC code blocks other than the preset FEC code blocks; and sequentially set each FEC code block of the plurality of preset FEC code blocks at a header of the downlink frame in the corresponding FEC decoding mode.

In an illustrative example, the apparatus is further configured to agree a first downlink slot of the downlink frame of each FEC code type with the ONU; and set the downlink time-division scheduling result at a tail of each downlink slot before completing sending of the corresponding downlink frame in each downlink slot of the downlink frame of each FEC code type according to the downlink time-division scheduling result. The downlink time-division scheduling result is used to indicate start time of a next downlink slot.

In an illustrative example, the apparatus is further configured to set, in a case where the plurality of downlink services are sent based on a plurality of downlink frames in a plurality of modulation modes, the downlink time-division scheduling result in a first downlink sub-frame of the downlink frame in each of the modulation modes. The first downlink sub-frame carries a downlink synchronization header in the corresponding modulation mode. The first downlink sub-frame is located at a header of the downlink frame in each of the modulation modes. The downlink time-division scheduling result is a sending moment and sending duration of the downlink service or a sending moment and a sending end moment of the downlink service in a same type of modulation mode.

In an illustrative example, the apparatus is further configured to determine a start moment of a first downlink slot of the downlink frame in each of the modulation modes according to the downlink synchronization header in each of the modulation modes; and set the downlink time-division scheduling result at a tail of each downlink slot before completing sending of the corresponding downlink frame in each downlink slot of the downlink frame in each of the modulation modes according to the downlink time-division scheduling result. The downlink time-division scheduling result is used to indicate start time of a next downlink slot.

In an illustrative example, the apparatus is further configured to set, in a case where the plurality of downlink services are sent based on a plurality of downlink frames at a plurality of line rates, the downlink time-division scheduling result in a second downlink sub-frame of the downlink frame at each of the line rates. The second downlink sub-frame carries a downlink synchronization header at the corresponding line rate. The second downlink sub-frame is located at a header of the downlink frame at each of the line rates. The downlink time-division scheduling result is a sending moment and sending duration of the downlink service or a sending moment and a sending end moment of the downlink service at a same type of line rate.

In an illustrative example, the apparatus is further configured to determine a start moment of a first downlink slot of the downlink frame at each of the line rates according to the downlink synchronization header at each of the line rates; and set the downlink time-division scheduling result at a tail of each downlink slot before completing sending of the corresponding downlink frame in each downlink slot of the downlink frame at each of the line rates according to the downlink time-division scheduling result. The downlink time-division scheduling result is used to indicate start time of a next downlink slot.

Fig. 20 is a block diagram of a structure of another apparatus for sending a downlink service according to an example of the present invention. As shown in Fig. 20, the apparatus for sending a downlink service includes:
a scheduling module 2001 configured to determine a to-be-sent downlink service, and perform downlink time-division scheduling on the downlink service based on at least one of the following: service traffic, service characteristics, and external input; and
a second sharing module 2002 configured to share, before sending the downlink service based on a downlink time-division scheduling result of the downlink service, the downlink time-division scheduling result of the downlink service with an ONU according to a first specified mode. The downlink time-division scheduling result at least includes sending moments of one or more downlink services.

Through the apparatus, as the OLT shares the downlink time-division scheduling result of the downlink service with the ONU in advance and the ONU is given a receiving suggestion for receiving the downlink service, the ONU may receive the downlink service sent by the OLT according to the downlink time-division scheduling result. In this way, a problem that the optical network unit cannot efficiently receive the downlink service sent by the optical line terminal is solved, such that the optical network unit can efficiently receive the downlink service sent by the optical line terminal.

In an illustrative example, the scheduling module 2001 is further configured to predict service traffic of each downlink service; allocate a bandwidth to each downlink service according to the service traffic of each downlink service, and a priority and/or a weight of each downlink service; and determine the downlink time-division scheduling result according to the bandwidth allocated to each downlink service. The downlink time-division scheduling result is a sending moment and sending duration, or a sending moment and a sending end moment of each downlink service.

In an illustrative example, the scheduling module 2001 is further configured to predict service traffic of each downlink service; and perform local scheduling on each downlink service according to the service traffic of each downlink service, and determine a sending length of each downlink service. The downlink time-division scheduling result includes a sending moment and a sending length of each downlink service.

In an illustrative example, the scheduling module 2001 is further configured to predict the service traffic of each downlink service in the following mode: a cache data volume of each downlink service is obtained; and the service traffic of each downlink service is predicted according to the cache data volume of each downlink service, a historical data transmission volume of each downlink service, and a historical scheduling result.

In an illustrative example, the scheduling module 2001 is further configured to allocate, in a case where the downlink service includes a low-latency service, a fixed slot to the low-latency service, and obtain a first scheduling result, where allowed latency time of the low-latency service is less than a preset threshold; and perform downlink time-division scheduling on a downlink service except the low-latency service in the downlink services, and obtain a second scheduling result. The downlink time-division scheduling result includes the first scheduling result and the second scheduling result. The downlink time-division scheduling result is a sending moment and sending duration or a sending moment and a sending end moment of the low-latency service and/or another downlink service.

In an illustrative example, the scheduling module 2001 is further configured to split, after obtaining the first scheduling result, a bandwidth of the low-latency service according to the first scheduling result, and re-determine the downlink time-division scheduling result according to a splitting result.

In an illustrative example, the scheduling module 2001 is further configured to obtain a fixed slot of each downlink service in the external input, and obtain the downlink time-division scheduling result.

In an illustrative example, the scheduling module 2001 is further configured to execute, before performing downlink time-division scheduling on the downlink service, one of the following steps:
a downlink service corresponding to each ONU is determined; predicted service traffic of the downlink service corresponding to each ONU is predicted; and a bandwidth is allocated to each ONU according to the predicted service traffic corresponding to each ONU and the weight of each ONU; and
the downlink services are scheduled according to priorities and/or weights, and a bandwidth corresponding to each downlink service is determined; and bandwidths of downlink services corresponding to a same ONU are collected, bandwidths of downlink services corresponding to ONUs in a same forward error correction (FEC) decoding mode are collected, bandwidths of downlink services corresponding to ONUs in a same modulation mode are collected, or bandwidths of downlink services corresponding to ONUs at a same line rate are collected.

In an illustrative example, the apparatus is further configured to determine a first slot corresponding to a first type of downlink service according to the downlink time-division scheduling result, and send the first type of downlink service in the first slot, where the first type of downlink service includes one downlink service; and/or determine a second slot corresponding to a second type of downlink services according to the downlink time-division scheduling result, and send the plurality of downlink services according to a priority and/or a weight of each of the plurality of downlink services in the second slot. The second type of downlink services include the plurality of downlink services.

In an illustrative example, the apparatus is further configured to send, after sending the downlink service based on the downlink time-division scheduling result of the downlink service, the downlink service in a slot other than the downlink time-division scheduling result in a target scheduling mode. The target scheduling mode includes a priority-based scheduling mode and a weight-based scheduling mode.

Fig. 21 is a block diagram of a structure of an apparatus for receiving a downlink service according to an example of the present invention. As shown in Fig. 21, the apparatus for receiving a downlink service includes:
an obtaining module 2101 configured to obtain a downlink time-division scheduling result of the downlink service according to a second specified mode, where the downlink time-division scheduling result at least includes sending moments of one or more downlink services; and
a receiving module 2102 configured to receive a target downlink service according to the downlink time-division scheduling result, where the target downlink service is a service related to a target ONU in the one or more downlink services.

The apparatus for receiving a downlink service is applied to the target ONU, which is not limitative. The target ONU is one of a plurality of ONUs.

Through the apparatus, as the ONU obtains the downlink time-division scheduling result before receiving the target downlink service, the ONU may receive the downlink service sent by an OLT according to the downlink time-division scheduling result. In this way, a problem that the optical network unit cannot efficiently receive the downlink service sent by the optical line terminal is solved, such that the optical network unit can efficiently receive the downlink service sent by the optical line terminal.

In an illustrative example, the second specified mode includes the following steps: the target ONU obtains the downlink time-division scheduling result at a second specified position of a downlink frame, and the OLT and the target ONU agree the downlink time-division scheduling result.

In an illustrative example, the second specified position includes a header or a tail of the downlink frame.

In an illustrative example, the obtaining module 2101 is further configured to parse the received downlink frame, and obtain a frame header of an FS frame from a first FEC code block in the downlink frame; and obtain the downlink time-division scheduling result from the frame header of the FS frame. The downlink time-division scheduling result is a sending moment and sending duration of the target downlink service, or a sending moment and a sending end moment of the target downlink service.

In an illustrative example, the obtaining module 2101 is further configured to parse the received downlink frame, and determine a target preset FEC code block corresponding to an FEC decoding mode corresponding to the target ONU from a plurality of preset FEC code blocks at the header of the downlink frame; and obtain the downlink time-division scheduling result from the target preset FEC code block. A sending moment and duration of the target preset FEC code block are pre-agreed. The downlink time-division scheduling result is a sending moment and sending duration of the target downlink service or a sending moment and a sending end moment of the target downlink service other than the target preset FEC code block.

In an illustrative example, the obtaining module 2101 is further configured to search a plurality of received downlink frames for a target downlink frame, where a preset FEC code block at a header of the target downlink frame corresponds to an FEC decoding mode corresponding to the target ONU; and obtain the downlink time-division scheduling result from the preset FEC code block at the header of the target downlink frame. A sending moment and duration of the preset FEC code block are pre-agreed with the OLT. The downlink time-division scheduling result is a sending moment and sending duration of the target downlink service or a sending moment and a sending end moment of the target downlink service other than the preset FEC code block.

In an illustrative example, the obtaining module 2101 is further configured to obtain the downlink time-division scheduling result from a tail of each downlink slot of a downlink frame of each FEC code type. The downlink time-division scheduling result is used to indicate start time of a next downlink slot. A first downlink slot of the downlink frame of each FEC code type is pre-agreed with the OLT.

In an illustrative example, the obtaining module 2101 is further configured to search a plurality of received downlink frames for a target downlink frame, where a modulation mode of the target downlink frame corresponds to a modulation mode of the target ONU; and obtain the downlink time-division scheduling result from a first downlink sub-frame of the target downlink frame. The first downlink sub-frame carries a downlink synchronization header in the modulation mode corresponding to the target downlink frame. The first downlink sub-frame is located at a header of the target downlink frame. The downlink time-division scheduling result is a sending moment and sending duration of the target downlink service or a sending moment and a sending end moment of the target downlink service in a same type of modulation mode.

In an illustrative example, the obtaining module 2101 is further configured to obtain the downlink time-division scheduling result from a tail of each downlink slot of a downlink frame in each modulation mode. The downlink time-division scheduling result indicates a start moment of a next downlink slot. A start moment of a first downlink slot of the downlink frame in each modulation mode is determined according to a downlink synchronization header in the corresponding modulation mode.

In an illustrative example, the obtaining module 2101 is further configured to search a plurality of received downlink frames for a target downlink frame, where a line rate of the target downlink frame corresponds to a line rate corresponding to the target ONU; and obtain the downlink time-division scheduling result from a second downlink sub-frame of the target downlink frame. The second downlink sub-frame carries a downlink synchronization header at the line rate corresponding to the target downlink frame. The second downlink sub-frame is located at a header of the target downlink frame. The downlink time-division scheduling result is a sending moment and sending duration of the target downlink service or a sending moment and a sending end moment of the target downlink service in a same type of line rate mode.

In an illustrative example, the obtaining module 2101 is further configured to obtain the downlink time-division scheduling result from a tail of each downlink slot of a downlink frame at each line rate. The downlink time-division scheduling result indicates a start moment of a next downlink slot. A start moment of a first downlink slot of the downlink frame at each line rate is determined according to a downlink synchronization header at the corresponding line rate.

In an illustrative example, the receiving module 2102 is further configured to determine a receiving start moment and a receiving end moment of the target downlink service according to the downlink time-division scheduling result; parse a downlink frame received at a current moment at the receiving start moment, and receive the target downlink service; and stop parsing of the downlink frame received at the current moment at the receiving end moment, and stop receiving of the target downlink service.

In an illustrative example, the receiving module 2102 is further configured to parse the downlink frame received at the current moment at the receiving start moment through at least one of the following steps: the received downlink frame is parsed according to an FEC decoding mode corresponding to the target ONU at the receiving start moment; the received downlink frame is parsed according to a modulation mode corresponding to the target ONU at the receiving start moment; and the received downlink frame is parsed according to a line rate corresponding to the target ONU at the receiving start moment.

It should be noted that all the modules may be implemented by software or hardware. In the latter case, the modules are located in the same processor, or all the modules are separately located in different processors in any combination form, which is not limitative.

An example of the present invention further provides a computer program product. The computer program product includes a non-volatile computer-readable storage medium. The non-volatile computer-readable storage medium stores a computer program. The computer program is configured to execute steps of any one of the above method examples at runtime.

An example of the present invention further provides a computer-readable storage medium. The computer-readable storage medium stores a computer program. The computer program is configured to execute the steps of any one of the method examples at runtime.

In an illustrative example, the computer-readable storage medium may include, but is not limited to, a universal serial bus (USB) flash disk, a read-only memory (ROM), a random access memory (RAM), a mobile hard disk, a magnetic disk, an optical disk, and various media configured to store computer programs.

An example of the present invention further provides an electronic apparatus. The electronic apparatus includes a memory and a processor. The memory stores a computer program. The processor is configured to run the computer program to execute the steps of any one of the method examples.

In an illustrative example, the electronic apparatus may further include a transmission device and an input/output device. The transmission device is connected to the processor. The input/output device is connected to the processor.

Reference may be made to the instances described in the above examples and illustrative embodiments for specific instances in the example, which is not repeated in the example.

Obviously, those skilled in the art should understand that all the modules or steps of the present invention can be implemented through a general-purpose calculation apparatus, can be centralized on a single calculation apparatus or distributed on a network composed of a plurality of calculation apparatuses, or can be implemented through program codes executable by a calculation apparatus, such that they can be stored in a storage apparatus so as to be executed by the calculation apparatus. In addition, in some cases, the steps shown or described can be executed in an order different from that herein. They can be fabricated separately as individual integrated circuit modules, or a plurality of modules or steps of them can be fabricated as a single integrated circuit module for implementation. Thus, the present invention is not limited to any particular combination of hardware and software.

What are described above are merely preferred examples of the present invention and are not intended to limit the present invention, and various changes and modifications can be made to the present invention by those skilled in the art. Any modifications, equivalent substitutions, improvements, etc. within principles of the present invention are intended to fall within the protection scope of the present invention.

## Claims

1. A method for sending a downlink service, comprising:
sharing, by an optical line terminal, OLT, a downlink time-division scheduling result of the downlink service with an optical network unit, ONU, according to a first specified mode, wherein the downlink time-division scheduling result at least comprises sending moments of one or more downlink services; and
sending, by the OLT, the downlink service according to the downlink time-division scheduling result.

2. The method according to claim 1, wherein the first specified mode comprises: sending, by the OLT, the downlink time-division scheduling result at a first specified position of a downlink frame, and agreeing the downlink time-division scheduling result by the OLT and the ONU.

3. The method according to claim 2, wherein the first specified position comprises a header of a downlink frame of one service type, and headers or tails of downlink frames of a plurality of service types.

4. The method according to claim 3, wherein setting, by the OLT, the downlink time-division scheduling result at the header of the downlink frame of the one service type to share the downlink time-division scheduling result of the downlink service with the ONU comprises:
setting, in a case where the downlink service is sent based on a downlink frame in one forward error correction, FEC, decoding mode, the downlink time-division scheduling result in a first FEC code block of the downlink frame by the OLT, wherein the downlink time-division scheduling result is a sending moment and sending duration of the downlink service, or a sending moment and a sending end moment of the downlink service.

5. The method according to claim 3, wherein setting, by the OLT, the downlink time-division scheduling result at the header of the downlink frame of the one service type to share the downlink time-division scheduling result of the downlink service with the ONU comprises:
determining, in a case where the plurality of downlink services are sent based on downlink frames in a plurality of FEC decoding modes, a preset FEC code block corresponding to each of the plurality of FEC decoding modes by the OLT, and setting the downlink time-division scheduling result in each of the preset FEC code blocks, wherein sending moments and sending duration of the preset FEC code blocks are pre-agreed with the ONU, the downlink time-division scheduling result is the sending moments and sending duration of the plurality of downlink services or the sending moments and sending end moments of the plurality of downlink services other than the preset FEC code blocks, and the downlink time-division scheduling result at least further comprises a sending position of the downlink service, which has a same FEC code type as the preset FEC code blocks; and
setting, by the OLT, the plurality of preset FEC code blocks at the header of the downlink frame of the one service type.

6. The method according to claim 3, wherein setting, by the OLT, the downlink time-division scheduling result at the headers of the downlink frames of the plurality of service types to share the downlink time-division scheduling result of the downlink service with the ONU comprises:
determining, in a case where the plurality of downlink services are sent based on a plurality of downlink frames in a plurality of FEC decoding modes, a preset FEC code block corresponding to each of the plurality of FEC decoding modes by the OLT, and setting the downlink time-division scheduling result in each of the preset FEC code blocks, wherein the downlink time-division scheduling result is a sending moment and sending duration of the downlink service or a sending moment and a sending end moment of the downlink service having a same type as the preset FEC code blocks other than the preset FEC code blocks; and
sequentially setting, by the OLT, each FEC code block of the plurality of preset FEC code blocks at a header of the downlink frame in the corresponding FEC decoding mode.

7. The method according to claim 5 or 6, wherein setting, by the OLT, the downlink time-division scheduling result at the tails of the downlink frames of the plurality of service types to share the downlink time-division scheduling result of the downlink service with the ONU comprises:
agreeing a first downlink slot of the downlink frame of each FEC code type by the OLT and the ONU; and
setting, by the OLT, the downlink time-division scheduling result at a tail of each downlink slot before the OLT completes sending of the corresponding downlink frame in each downlink slot of the downlink frame of each FEC code type according to the downlink time-division scheduling result, wherein the downlink time-division scheduling result is used to indicate start time of a next downlink slot.

8. The method according to claim 3, wherein setting, by the OLT, the downlink time-division scheduling result at the headers of the downlink frames of the plurality of service types to share the downlink time-division scheduling result of the downlink service with the ONU comprises:
setting, in a case where the plurality of downlink services are sent based on a plurality of downlink frames in a plurality of modulation modes, the downlink time-division scheduling result in a first downlink sub-frame of the downlink frame in each of the modulation modes by the OLT, wherein the first downlink sub-frame carries a downlink synchronization header in the corresponding modulation mode, and the first downlink sub-frame is located at a header of the downlink frame in each of the modulation modes; and the downlink time-division scheduling result is a sending moment and sending duration of the downlink service or a sending moment and a sending end moment of the downlink service in a same type of modulation mode.

9. The method according to claim 8, wherein setting, by the OLT, the downlink time-division scheduling result at the tails of the downlink frames of the plurality of service types to share the downlink time-division scheduling result of the downlink service with the ONU comprises:
determining, by the OLT, a start moment of a first downlink slot of the downlink frame in each of the modulation modes according to the downlink synchronization header in each of the modulation modes; and
setting, by the OLT, the downlink time-division scheduling result at a tail of each downlink slot before completing sending of the corresponding downlink frame in each downlink slot of the downlink frame in each of the modulation modes according to the downlink time-division scheduling result, wherein the downlink time-division scheduling result is used to indicate start time of a next downlink slot.

10. The method according to claim 3, wherein setting, by the OLT, the downlink time-division scheduling result at the headers of the downlink frames of the plurality of service types to share the downlink time-division scheduling result of the downlink service with the ONU comprises:
setting, in a case where the plurality of downlink services are sent based on a plurality of downlink frames at a plurality of line rates, the downlink time-division scheduling result in a second downlink sub-frame of the downlink frame at each of the line rates by the OLT, wherein the second downlink sub-frame carries a downlink synchronization header at the corresponding line rate, and the second downlink sub-frame is located at a header of the downlink frame at each of the line rates; and the downlink time-division scheduling result is a sending moment and sending duration of the downlink service or a sending moment and a sending end moment of the downlink service at a same type of line rate.

11. The method according to claim 10, wherein setting, by the OLT, the downlink time-division scheduling result at the tails of the downlink frames of the plurality of service types to share the downlink time-division scheduling result of the downlink service with the ONU comprises:
determining, by the OLT, a start moment of a first downlink slot of the downlink frame at each of the line rates according to the downlink synchronization header at each of the line rates; and
setting, by the OLT, the downlink time-division scheduling result at a tail of each downlink slot before completing sending of the corresponding downlink frame in each downlink slot of the downlink frame at each of the line rates according to the downlink time-division scheduling result, wherein the downlink time-division scheduling result is used to indicate start time of a next downlink slot.

12. A method for sending a downlink service, comprising:
determining a to-be-sent downlink service, and performing downlink time-division scheduling on the downlink service based on at least one of the following: service traffic, service characteristics, and external input; and
sharing, before sending the downlink service based on a downlink time-division scheduling result of the downlink service, the downlink time-division scheduling result of the downlink service with an optical network unit, ONU, according to a first specified mode, wherein the downlink time-division scheduling result at least comprises sending moments of one or more downlink services.

13. The method according to claim 12, wherein the performing downlink time-division scheduling on the downlink service based on service traffic comprises:
predicting service traffic of each downlink service;
allocating a bandwidth to each downlink service according to the service traffic of each downlink service, and a priority and/or a weight of each downlink service; and
determining the downlink time-division scheduling result according to the bandwidth allocated to each downlink service, wherein the downlink time-division scheduling result is a sending moment and sending duration, or a sending moment and a sending end moment of each downlink service.

14. The method according to claim 12, wherein the performing downlink time-division scheduling on the downlink service based on service traffic comprises:
predicting service traffic of each downlink service; and
performing local scheduling on each downlink service according to the service traffic of each downlink service, and determining a sending length of each downlink service, wherein the downlink time-division scheduling result comprises a sending moment and a sending length of each downlink service.

15. The method according to claim 13 or 14, wherein the predicting service traffic of each downlink service comprises:
obtaining a cache data volume of each downlink service; and
predicting the service traffic of each downlink service according to the cache data volume of each downlink service, a historical data transmission volume of each downlink service, and a historical scheduling result.

16. The method according to claim 12, wherein the performing downlink time-division scheduling on the downlink service based on service characteristics comprises:
allocating, in a case where the downlink service comprises a low-latency service, a fixed slot to the low-latency service, and obtaining a first scheduling result, wherein allowed latency time of the low-latency service is less than a preset threshold; and
performing downlink time-division scheduling on a downlink service except the low-latency service in the downlink services, and obtaining a second scheduling result, wherein the downlink time-division scheduling result comprises the first scheduling result and the second scheduling result, and the downlink time-division scheduling result is a sending moment and sending duration or a sending moment and a sending end moment of the low-latency service and/or another downlink service.

17. The method according to claim 16, wherein after the obtaining a first scheduling result, the method further comprises:
splitting a bandwidth of the low-latency service according to the first scheduling result, and re-determining the downlink time-division scheduling result according to a splitting result.

18. The method according to claim 12, wherein the performing downlink time-division scheduling on the downlink service based on external input comprises:
obtaining a fixed slot of each downlink service in the external input, and obtaining the downlink time-division scheduling result.

19. The method according to claim 12, wherein before the performing downlink time-division scheduling on the downlink service, the method further comprises one of the following steps:
determining a downlink service corresponding to each ONU; predicting predicted service traffic of the downlink service corresponding to each ONU; and allocating a bandwidth to each ONU according to the predicted service traffic corresponding to each ONU and the weight of each ONU; and
scheduling the downlink services according to priorities and/or weights, and determining a bandwidth corresponding to each downlink service; and collecting bandwidths of downlink services corresponding to a same ONU, collecting bandwidths of downlink services corresponding to ONUs in a same forward error correction, FEC, decoding mode, collecting bandwidths of downlink services corresponding to ONUs in a same modulation mode, or collecting bandwidths of downlink services corresponding to ONUs at a same line rate.

20. The method according to claim 12, wherein the sending the downlink service based on a downlink time-division scheduling result of the downlink service comprises:
determining a first slot corresponding to a first type of downlink service according to the downlink time-division scheduling result, and sending the first type of downlink service in the first slot, wherein the first type of downlink service comprises one downlink service; and/or
determining a second slot corresponding to a second type of downlink services according to the downlink time-division scheduling result, and sending the plurality of downlink services according to a priority and/or a weight of each of the plurality of downlink services in the second slot, wherein the second type of downlink services comprise the plurality of downlink services.

21. The method according to claim 12, wherein after the sending the downlink service based on a downlink time-division scheduling result of the downlink service, the method further comprises:
sending the downlink service in a slot other than the downlink time-division scheduling result in a target scheduling mode, wherein the target scheduling mode comprises a priority-based scheduling mode and a weight-based scheduling mode.

22. A method for receiving a downlink service, comprising:
obtaining, by an optical network unit, ONU, a downlink time-division scheduling result of the downlink service according to a second specified mode, wherein the downlink time-division scheduling result at least comprises sending moments of one or more downlink services; and
receiving, by the ONU, a target downlink service according to the downlink time-division scheduling result, wherein the target downlink service is a service related to the ONU in the one or more downlink services.

23. The method according to claim 22, wherein the second specified mode comprises: obtaining, by the ONU, the downlink time-division scheduling result at a second specified position of a downlink frame, and agreeing the downlink time-division scheduling result by an OLT and the ONU.

24. The method according to claim 23, wherein the second specified position comprises a header or a tail of the downlink frame.

25. The method according to claim 23, wherein obtaining, by the ONU, the downlink time-division scheduling result of the downlink service from a header of the downlink frame comprises:
parsing the received downlink frame by the ONU, and obtaining a frame header of a frame start (FS) frame from a first FEC code block in the downlink frame; and
obtaining the downlink time-division scheduling result from the frame header of the FS frame, wherein the downlink time-division scheduling result is a sending moment and sending duration of the target downlink service, or a sending moment and a sending end moment of the target downlink service.

26. The method according to claim 23, wherein obtaining, by the ONU, the downlink time-division scheduling result of the downlink service from a header of the downlink frame comprises:
parsing the received downlink frame by the ONU, and determining a target preset FEC code block corresponding to an FEC decoding mode corresponding to the ONU from a plurality of preset FEC code blocks at the header of the downlink frame; and
obtaining the downlink time-division scheduling result from the target preset FEC code block, wherein a sending moment and duration of the target preset FEC code block are pre-agreed, and the downlink time-division scheduling result is a sending moment and sending duration of the target downlink service or a sending moment and a sending end moment of the target downlink service other than the target preset FEC code block.

27. The method according to claim 23, wherein obtaining, by the ONU, the downlink time-division scheduling result of the downlink service from a header of the downlink frame comprises:
searching a plurality of received downlink frames for a target downlink frame by the ONU, wherein a preset FEC code block at a header of the target downlink frame corresponds to an FEC decoding mode corresponding to the ONU; and
obtaining the downlink time-division scheduling result from the preset FEC code block at the header of the target downlink frame, wherein a sending moment and duration of the preset FEC code block are pre-agreed with the OLT, and the downlink time-division scheduling result is a sending moment and sending duration of the target downlink service or a sending moment and a sending end moment of the target downlink service other than the preset FEC code block.

28. The method according to claim 26 or 27, wherein obtaining, by the ONU, the downlink time-division scheduling result of the downlink service from a tail of the downlink frame comprises:
obtaining, by the ONU, the downlink time-division scheduling result from a tail of each downlink slot of a downlink frame of each FEC code type, wherein the downlink time-division scheduling result is used to indicate start time of a next downlink slot, and a first downlink slot of the downlink frame of each FEC code type is pre-agreed with the OLT.

29. The method according to claim 23, wherein obtaining, by the ONU, the downlink time-division scheduling result of the downlink service from a header of the downlink frame comprises:
searching a plurality of received downlink frames for a target downlink frame by the ONU, wherein a modulation mode of the target downlink frame corresponds to a modulation mode of the ONU; and
obtaining the downlink time-division scheduling result from a first downlink sub-frame of the target downlink frame, wherein the first downlink sub-frame carries a downlink synchronization header in the modulation mode corresponding to the target downlink frame, and the first downlink sub-frame is located at a header of the target downlink frame; and the downlink time-division scheduling result is a sending moment and sending duration of the target downlink service or a sending moment and a sending end moment of the target downlink service in a same type of modulation mode.

30. The method according to claim 29, wherein obtaining, by the ONU, the downlink time-division scheduling result of the downlink service from a tail of the downlink frame comprises:
obtaining, by the ONU, the downlink time-division scheduling result from a tail of each downlink slot of a downlink frame in each modulation mode, wherein the downlink time-division scheduling result indicates a start moment of a next downlink slot, and a start moment of a first downlink slot of the downlink frame in each modulation mode is determined according to a downlink synchronization header in the corresponding modulation mode.

31. The method according to claim 23, wherein obtaining, by the ONU, the downlink time-division scheduling result of the downlink service from a header of the downlink frame comprises:
searching a plurality of received downlink frames for a target downlink frame by the ONU, wherein a line rate of the target downlink frame corresponds to a line rate corresponding to the ONU; and
obtaining the downlink time-division scheduling result from a second downlink sub-frame of the target downlink frame, wherein the second downlink sub-frame carries a downlink synchronization header at the line rate corresponding to the target downlink frame, the second downlink sub-frame is located at a header of the target downlink frame, and the downlink time-division scheduling result is a sending moment and sending duration of the target downlink service or a sending moment and a sending end moment of the target downlink service in a same type of line rate mode.

32. The method according to claim 30, wherein obtaining, by the ONU, the downlink time-division scheduling result of the downlink service from the tail of the downlink frame comprises:
obtaining, by the ONU, the downlink time-division scheduling result from a tail of each downlink slot of a downlink frame at each line rate, wherein the downlink time-division scheduling result indicates a start moment of a next downlink slot, and a start moment of a first downlink slot of the downlink frame at each line rate is determined according to a downlink synchronization header at the corresponding line rate.

33. The method according to claim 23, wherein the receiving, by the ONU, a target downlink service according to the downlink time-division scheduling result comprises:
determining, by the ONU, a receiving start moment and a receiving end moment of the target downlink service according to the downlink time-division scheduling result;
parsing, by the ONU, a downlink frame received at a current moment at the receiving start moment, and receiving the target downlink service; and
stopping, by the ONU, parsing of the downlink frame received at the current moment at the receiving end moment, and stopping receiving of the target downlink service.

34. The method according to claim 33, wherein the parsing, by the ONU, a downlink frame received at a current moment at the receiving start moment comprises at least one of the following steps:
parsing the received downlink frame according to an FEC decoding mode corresponding to the ONU at the receiving start moment;
parsing the received downlink frame according to a modulation mode corresponding to the ONU at the receiving start moment; and
parsing the received downlink frame according to a line rate corresponding to the ONU at the receiving start moment.

35. An apparatus for sending a downlink service, comprising:
a first sharing module configured to share a downlink time-division scheduling result of the downlink service with an optical network unit, ONU, according to a first specified mode, wherein the downlink time-division scheduling result at least comprises sending moments of one or more downlink services; and
a sending module configured to send the downlink service according to the downlink time-division scheduling result.

36. An apparatus for sending a downlink service, comprising:
a scheduling module configured to determine a to-be-sent downlink service, and perform downlink time-division scheduling on the downlink service based on at least one of the following: service traffic, service characteristics, and external input; and
a second sharing module configured to share, before sending the downlink service based on a downlink time-division scheduling result of the downlink service, the downlink time-division scheduling result of the downlink service with an optical network unit, ONU, according to a first specified mode, wherein the downlink time-division scheduling result at least comprises sending moments of one or more downlink services.

37. An apparatus for receiving a downlink service, comprising:
an obtaining module configured to obtain a downlink time-division scheduling result of the downlink service according to a second specified mode, wherein the downlink time-division scheduling result at least comprises sending moments of one or more downlink services; and
a receiving module configured to receive a target downlink service according to the downlink time-division scheduling result, wherein the target downlink service is a service related to a target optical network unit, ONU, in the one or more downlink services.

38. A computer-readable storage medium, storing a computer program, wherein the computer program is configured to, when executed by a processor, implement the steps of the method as claimed in any one of claims 1 to 11, steps of the method as claimed in any one of claims 12 to 21, or steps of the method as claimed in any one of claims 22 to 34.

39. An electronic apparatus, comprising a memory, a processor, and a computer program stored in the memory and executable by the processor, wherein the processor is configured to execute the computer program to implement the steps of the method as claimed in any one of claims 1 to 11, the steps of the method as claimed in any one of claims 12 to 21, or the steps of the method as claimed in any one of claims 22 to 34.
